# EUROPÄISCHE PATENTANMELDUNG

(11) **EP 4 431 382 A1**
(43) Veröffentlichungstag der Anmeldung: **18.09.2024**
(21) Anmeldenummer: 23162461.0
(22) Anmeldetag: 16.03.2023
(51) Int. Cl.: B64C 1/14, B60J 5/06, E06B 3/46, E05D 15/10

(54) **LAGERANORDNUNG FÜR EINE SCHIEBETÜR**

(71) Anmelder: Hubmann, Alfons, 3001 Bern (CH)
(72) Erfinder: Dix, Norman, 38442 Wolfsburg (DE)
(74) Vertreter: SSM Sandmair

(57) **Zusammenfassung**

Schiebetürsystem mit einem Gestell (2), einer Schiebetür (8) zum Verschließen einer Öffnung (7) des Gestells (2) und einer Lageranordnung zur beweglichen Lagerung der Schiebetür (8), die Lageranordnung umfassend:
1.1 eine erste Führungsbahn (11) und eine zweite Führungsbahn (12), die jeweils am Gestell (2) angeordnet sind,
1.2 ein erstes Eingriffsglied (21), das in einem Führungseingriff mit der ersten Führungsbahn (11) in Längsrichtung (L11) der ersten Führungsbahn (11) beweglich ist, und
1.3 ein zweites Eingriffsglied (22), das in einem Führungseingriff mit der zweiten Führungsbahn (12) in Längsrichtung (L12) der zweiten Führungsbahn (12) beweglich ist, wobei
1.4 die Schiebetür (8) an einer ersten Koppelstelle mit dem ersten Eingriffsglied (21) und an einer zweiten Koppelstelle mit dem zweiten Eingriffsglied (22) gekoppelt ist, so dass die Schiebetür (8) einer Bewegung des ersten Eingriffsglieds (21) und einer Bewegung des zweiten Eingriffsglieds (22) folgt,
1.5 die erste Führungsbahn (11) und die zweite Führungsbahn (12) in einer Draufsicht mit einer Neigung (α) zueinander verlaufen,
1.6 das erste Eingriffsglied (21) über ein erstes Gelenk (21, 24) mit der ersten Koppelstelle und das zweite Eingriffsglied (22) über ein zweites Gelenk (22, 25) mit der zeiten Koppelstelle der Schiebetür (8) beweglich verbunden sind, und
1.7 die erste Koppelstelle der Schiebetür (8) in Bezug auf die Längsrichtung (L11) der ersten Führungsbahn (11) und/oder in Bezug auf die Längsrichtung (L12) der zweiten Führungsbahn (12) zur zweiten Koppelstelle der Schiebetür (8) versetzt ist.

## Beschreibung

Die Erfindung ist auf ein Schiebetürsystem mit einer Schiebetür, einem Gestell und einer Lageranordnung zur beweglichen Lagerung der Schiebetür am oder im Gestell gerichtet. Insbesondere betrifft die Erfindung ein System, das eine Verschiebebewegung aus Translation und Rotation der Schiebetür ermöglicht. Das Schiebetürsystem kann für Schiebetüren unterschiedlichster Art und in unterschiedlichsten Verwendungen zum Einsatz kommen. Ein bevorzugtes Einsatzgebiet sind Schiebetüren für Fahrzeuge einschließlich Wasserfahrzeuge, Straßenfahrzeuge, Nutzfahrzeuge, Schienenfahrzeuge und Luftfahrzeuge. Die Erfindung ist vorteilhaft insbesondere für Drehflügler, wie etwa Helikopter und Gyrokopter sowie Mischformen daraus.

Eine Schiebetür führt relativ zu einem Gestell, an dem sie abgestützt ist, zumeist eine einfache, gerade Schiebebewegung aus, so dass sie längs einer geraden Führungsbahn geführt werden kann. In manchen Anwendungen besteht das Bestreben, dass die Schiebtür bei ihrer Verschiebebewegung einen Bogen beschreibt. Ein Beispiel sind Luftfahrzeuge, insbesondere Drehflügler, deren Ein- und Ausstiegsöffnungen oder Ladeöffnungen in vielen Fällen mittels Schiebetüren verschließbar sind. Die Schiebetüren sind an die gewölbte Zelle der Luftfahrzeuge angepasst. Oftmals besteht der Wunsch, dass eine Schiebetür auch im Flug verschoben werden kann, um beispielsweise eine Ein- und Ausstiegsöffnung für Personen ganz oder auch nur teilweise öffnen und wieder schließen zu können. Ist die Schiebetür ganz oder teilweise geöffnet, sollte dies die Aerodynamik des Luftfahrzeugs möglichst wenig durch zusätzliche Strömungswiderstände oder Verwirbelungen beeinträchtigen. Auch am Boden sollte die offene Schiebetür in einer Stirnsicht oder Draufsicht auf das Luftfahrzeug im Vergleich zur geschlossenen Position möglichst wenig von der Zelle abstehen, um das Verletzungsrisiko bei Arbeiten am Luftfahrzeug oder einer Begehung zu minimieren.

Soll die Schiebtür bei ihrer Schiebebewegung einen Bogen beschreiben, kann sie längs einer angepasst gekrümmten Führungsbahn geführt werden. Die Herstellung gekrümmter Führungsbahnen ist jedoch mit hohen Kosten zumindest dann verbunden, wenn sie nicht in großen Stückzahlen gefertigt werden können. Die Anforderungen an die Genauigkeit der Montage sind im Vergleich zu geraden Führungsbahnen ebenfalls erhöht.

Es ist eine Aufgabe der Erfindung, die Beweglichkeit einer Schiebetür so zu gestalten, dass die Schiebetür Bewegungen angepasst an die Form eines sie stützenden Gestells ausführt. Ein hierfür geeignetes Schiebetürsystem soll mit einfachen Konstruktionsmitteln verwirklicht werden.

Die Erfindung geht von einem Schiebetürsystem mit einem Gestell, einer Schiebetür zum Verschließen einer Öffnung des Gestells und einer Lageranordnung für eine relativ zum Gestell bewegliche Lagerung der Schiebetür aus. Die Lageranordnung umfasst eine erste Führungsbahn und eine zweite Führungsbahn, die jeweils am Gestell angeordnet sind, sowie ein erstes Eingriffsglied und ein zweites Eingriffsglied. Das erste Eingriffsglied ist mit der ersten Führungsbahn in einem ersten Führungseingriff und im ersten Führungseingriff in eine Längsrichtung der ersten Führungsbahn beweglich. Das zweite Eingriffsglied ist mit der zweiten Führungsbahn in einem zweiten Führungseingriff und im zweiten Führungseingriff in eine Längsrichtung der zweiten Führungsbahn beweglich. Die Schiebetür ist zur Übertragung von Kraft und/oder Drehmoment an einer ersten Koppelstelle mit dem ersten Eingriffsglied und an einer zweiten Koppelstelle mit dem zweiten Eingriffsglied mechanisch gekoppelt, so dass sie den Bewegungen des ersten Eingriffsglieds und Bewegungen des zweiten Eingriffsglieds folgt.

Bei dem Gestell kann es sich um eine Zelle oder einen Teilbereich einer Zelle eines Luftfahrzeugs, insbesondere eines Drehflüglers, handeln. Das Gestell kann aber auch eine andere Struktur eines Luftfahrzeugs oder eines Fahrzeugs anderer Art sein. Das Gestell kann sich auch aus unterschiedlichen Strukturen zusammensetzen. Die Erfindung ist zwar bevorzugt auf den Fahrzeugbereich gerichtet, grundsätzlich aber auch für stationäre Verwendungen, beispielsweise im Gebäudebereich, geeignet. Die Schiebetür dient dem Verschließen einer Öffnung des Gestells, beispielsweise einer Ein- und Ausstiegsöffnung eines Luftfahrzeugs. Sie kann plattenförmig oder gewölbt, beispielsweise in Anpassung an eine Wölbung des Gestells gewölbt sein. Sie kann beispielsweise als gewölbte Schalenstruktur ausgeführt sein.

Nach der Erfindung verlaufen die erste Führungsbahn und die zweite Führungsbahn in einer gemeinsamen Draufsicht relativ zueinander mit einer Neigung, sind also in der Draufsicht nicht parallel. Ferner ist die zweite Koppelstelle der Schiebetür, an der das zweite Eingriffsglied mit der Schiebetür zur Kraftübertragung gekoppelt ist, zur ersten Koppelstelle, an der das erste Eingriffsglied mit der Schiebetür zur Kraftübertragung gekoppelt ist, in Bezug auf die Längsrichtung der ersten Führungsbahn und/oder in Bezug auf die Längsrichtung der zweiten Führungsbahn und somit in Verschieberichtung der Schiebetür versetzt. Um Bewegungen der Eingriffsglieder längs beider Führungsbahnen trotz der Neigung der Führungsbahnen relativ zueinander und der Kopplung mit der Schiebetür zu ermöglichen, sind das erste Eingriffsglied mittels eines ersten Gelenks und das zweite Eingriffsglied mittels eines zweiten Gelenks mit der Schiebetür beweglich gekoppelt.

Die Ebene der gemeinsamen Draufsicht erstreckt sich in Verschieberichtung der Schiebetür und quer zur Verschieberichtung. Steht die Schiebetür aufrecht und ist zumindest im Wesentlichen horizontal verschiebbar, wie dies bei Schiebetüren zum Verschließen von Ein- und Ausstiegsöffnungen oder Durchgangsöffnungen für Personen meistens der Fall ist, kann die Draufsicht eine Horizontalebene sein. Ist die Schiebetür Bestandteil eines Fahrzeugs oder anderen mobilen Einrichtung, sind die Angaben "horizontal" und "vertikal" stets auf die Horizontallage des Fahrzeugs oder anderen mobilen Einrichtung bezogen, beispielsweise für den Stand oder eine Bewegung auf einer horizontalen Ebene, den Horizontalflug oder die Horizontalfahrt. Im allgemeinen Fall erstreckt sich die Ebene der Draufsicht in Verschieberichtung der Schiebetür und quer zu einer Querschnittsfläche oder in Richtung eines Normalenvektors einer Querschnittsfläche der Öffnung, die mittels der Schiebetür verschließbar ist. Zur Bestimmung der Neigung der einen relativ zur anderen Führungsbahn werden die Führungsbahnen auf die Ebene der Draufsicht parallel projiziert. Die erste Führungsbahn und/oder die zweite Führungsbahn kann oder können zur Ebene der Draufsicht insbesondere parallel sein. Eine etwaige Neigung zur Ebene der Draufsicht ist vorteilhafterweise kleiner als 30° oder kleiner als 20°.

Die in der gemeinsamen Draufsicht gemessene Neigung kann größer als 2° oder größer als 3° sein. Grundsätzlich kann die Neigung bis 90° betragen. Zweckmäßigerweise ist die Neigung aber höchstens 30° oder höchstens 20°. Besonders günstig sind Neigungswinkel zwischen 4° und 20° oder zwischen 5° und 20°, wobei die Bereichsgrenzen jeweils eingeschlossen sind.

Bei der Verschiebung der Schiebetür bewegen sich die Eingriffsglieder der Neigung der Führungsbahnen und der Verschieberichtung der Schiebetür entsprechend in der gemeinsamen Draufsicht im Führungseingriff quer zur Längsrichtung der ersten Führungsbahn und/oder der zweiten Führungsbahn voneinander weg oder aufeinander zu. Die Schiebtür führt dabei aufgrund der gelenkigen Kopplung mit den Eingriffsgliedern eine Translationsbewegung in Längsrichtung der jeweiligen Führungsbahn und dieser überlagert eine Dreh- oder Schwenkbewegung um den jeweiligen Führungseingriff aus. Die Bewegung der Eingriffsglieder in Längsrichtung der jeweiligen Führungsbahn bei gleichzeitiger Relativbewegung in Querrichtung prägt der Schiebetür bei ihrer Verschiebebewegung längs der Führungsbahnen über das erste Gelenk und das zweite Gelenk eine Schwenkbewegung um eine Rotationsachse auf, die quer zur Verschieberichtung weist. Die Verschieberichtung ändert sich wegen der Überlagerung von Translation und Rotation während der Verschiebebewegung der Schiebetür.

Vorteilhaft ist, wenn der Versatz, den die erste Koppelstelle zur zweiten Koppelstelle aufweist, größer als die Hälfte oder größer als zwei Drittel einer in die gleiche Richtung wie der Versatz gemessenen maximalen Breite der Öffnung des Gestells ist.

In bevorzugten Ausführungen sind das erste Eingriffsglied im ersten Führungseingriff und das zweite Eingriffsglied im zweiten Führungseingriff in Bezug auf die Längsrichtung der ersten Führungsbahn und/oder in Bezug auf die Längsrichtung der zweiten Führungsbahn und somit in Verschieberichtung der Schiebetür zueinander versetzt. Zweckmäßigerweise entspricht der Abstand einer zentralen Stelle des ersten Führungseingriffs von einer zentralen Stelle des zweiten Führungseingriffs zumindest im Wesentlichen dem Abstand einer zentralen Stelle der ersten Koppelstelle von einer zentralen Stelle der zweiten Koppelstelle der Schiebetür, um die erste Koppelstelle nahe dem ersten Führungseingriff und die zweite Koppelstelle nahe dem zweiten Führungseingriff anordnen und die Schiebetür den Führungsbahnen nahe über jeweils eine kurze Koppelstrecke führen zu können. Für eine kompakte, in sich steife Lageranordnung ist es günstig, wenn sich die beiden Abstände um weniger als 30% oder weniger als 20% oder weniger als 10% unterscheiden oder gleich sind, wobei die beiden Abstände in der gemeinsamen Draufsicht gemessen werden. Die beiden Abstände sind vorteilhafterweise in allen Verschiebepositionen der Schiebetür größer als der Abstand zwischen dem ersten Führungseingriff und der ersten Koppelstelle und/oder größer als der Abstand zwischen dem zweiten Führungseingriff und der zweiten Koppelstelle.

Aufgrund der relativ zueinander geneigten Führungsbahnen und des Versatzes der ersten Koppelstelle zur zweiten Koppelstelle führt die Schiebetür längs der Führungsbahnen eine aus Translation und Rotation überlagerte Bewegung aus. Dabei kann oder können die erste Führungsbahn oder die zweite Führungsbahn gerade sein. In bevorzugten Ausführungen ist sowohl die erste Führungsbahn als auch die zweite Führungsbahn gerade. Werden die Führungsbahnen mittels Führungsschienen bereitgestellt, erfordert die Erfindung somit keine rund gebogenen Führungsschienen, die an die Form des jeweiligen Gestells angepasst sein müssen, sondern kommt mit geraden Führungsschienen aus, die vergleichsweise einfach exakt auf Maß herstellbar und deshalb preiswert, in vielen Fällen auch als Stangenhalbzeug erhältlich und nur auf die erforderliche Länge zu bringen sind. Eine gerade Führungsbahn vereinfacht auch den Führungseingriff mit dem jeweiligen Eingriffsglied.

In Weiterbildungen umfasst das Schiebetürsystem zusätzlich eine dritte Führungsbahn, die ebenfalls am Gestell angeordnet ist, und ein drittes Eingriffsglied, das in einem dritten Führungseingriff mit der dritten Führungsbahn in Längsrichtung der dritten Führungsbahn beweglich ist, wobei die Schiebetür an einer dritten Koppelstelle mit dem dritten Eingriffsglied so gekoppelt ist, dass sie einer Bewegung des dritten Eingriffsglieds folgt. Hierbei kann die Lagerung der Schiebetür am Gestell als Dreipunktlagerung ausgeführt sein. Das Schiebetürsystem kann ein drittes Gelenk umfassen, das die Schiebetür mit dem dritten Eingriffsglied beweglich koppelt, um beim Verschieben der Schiebetür Ausgleichsbewegungen zwischen dem dritten Eingriffsglied und der Schiebetür zu ermöglichen.

Die dritte Koppelstelle der Schiebetür kann in Bezug auf die Längsrichtung der ersten Führungsbahn und/oder in Bezug auf die Längsrichtung der dritten Führungsbahn auf gleicher Höhe wie die erste Koppelstelle der Schiebetür oder stattdessen in Bezug auf die Längsrichtung der zweiten Führungsbahn und/oder in Bezug auf die Längsrichtung der dritten Führungsbahn auf gleicher Höhe wie die zweite Koppelstelle der Schiebetür vorgesehen sein. Sie kann aber auch zur ersten Koppelstelle und zur zweiten Koppelstelle versetzt sein.

Die dritte Führungsbahn kann zur ersten Führungsbahn oder stattdessen zur zweiten Führungsbahn parallel sein. Sie kann alternativ aber auch eine Neigung zur ersten Führungsbahn und eine Neigung zur zweiten Führungsbahn aufweisen. Die dritte Führungsbahn kann insbesondere gerade sein, so dass sie von einer geraden Führungsschiene gebildet werden kann. Ist die dritte Führungsbahn vorhanden, können somit zwei der Führungsbahnen parallel oder alle drei Führungsbahnen jeweils paarweise zueinander geneigt sein. Hierbei ist eine etwaige Abweichung von der Parallelität kleiner als die zur Erzeugung der Rotationsbewegung der Schiebetür vorhandene Neigung zwischen der Längsrichtung der ersten Führungsbahn und der Längsrichtung der zweiten Führungsbahn.

Die Führungsbahnen können aufgrund der Erfindung gerade sein, wie dies bevorzugt wird. Andererseits soll nicht kategorisch ausgeschlossen werden, dass eine oder mehrere der Führungsbahnen gekrümmt ist oder jeweils sind. Sollte eine Führungsbahn eine oder mehrere Krümmungen aufweisen, so gelten die Ausführungen zur Neigung der jeweiligen Führungsbahn zu der oder den anderen Führungsbahnen für eine gerade Verbindungslinie, welche die Endpunkte der jeweiligen gekrümmten Führungsbahn verbindet. Als Längsrichtung einer Führungsbahn wird die lokale Längsrichtung verstanden. Während eine gerade Führungsbahn durch eine Längsachse repräsentiert wird, zu der die Längsrichtung dieser Führungsbahn parallel ist, wird als Längsrichtung einer gekrümmten Führungsbahn die Richtung einer Tangente am jeweiligen Ort der Führungsbahn verstanden. Die beiden Endpunkte der jeweiligen Führungsbahn werden von der Position des mit der jeweiligen Führungsbahn im Führungseingriff befindlichen Eingriffsglieds bestimmt. Im Rahmen der Verschiebebewegung der Schiebetür bewegen sich die Eingriffsglieder in Richtung auf die Schließposition der Schiebetür bis maximal zum einen und in die Gegenrichtung bis maximal zum anderen Endpunkt der jeweiligen Führungsbahn.

Die Führungsbahnen können unmittelbar am Gestell geformt sein. In zweckmäßigen Ausführungen wird oder werden die erste Führungsbahn von einer ersten Führungsschiene und/oder die zweite Führungsbahn von einer zweiten Führungsschiene und/oder die dritte Führungsbahn, falls vorhanden, von einer dritten Führungsschiene gebildet, die separat vom Gestell gefertigt und mit dem Gestell unbeweglich gefügt ist. Die jeweilige Führungsschiene kann mit der Zelle stoffschlüssig, beispielsweise mittels Schweißverbindung und/oder Klebeverbindung, und/oder formschlüssig und/oder reibschlüssig, beispielsweise mittels Schraubverbindung und/oder Nietverbindung, gefügt sein. Eine Schraubverbindung hat den Vorteil, dass man erforderlichenfalls nachjustieren kann. Die jeweilige Führungsschiene kann eine Profilschiene sein. Die jeweilige Profilschiene kann ein Führungsprofil, beispielsweise in Form eines runden Profilstabs, und ein Leistenprofil umfassen, das vom Führungsprofil seitlich vorragt. Werden mehrere Führungsschienen verwendet, können diese im Profil bzw. Querschnitt gleich sein.

Umfasst das Schiebetürsystem die dritte Führungsbahn und das dritte Eingriffsglied, kann das dritte Eingriffsglied im dritten Führungseingriff zum ersten Eingriffsglied und ersten Führungseingriff und/oder zum zweiten Eingriffsglied und zweiten Führungseingriff in Verschieberichtung der Schiebetür, beispielsweise in Längsrichtung der ersten Führungsbahn, versetzt sein.

Die Führungsbahnen können sich in jeweils einer Bahnebene erstrecken, beispielsweise in Form jeweils einer geraden Führungsbahn. Die Bahnebenen sind in zweckmäßigen Ausführungen zueinander parallel und voneinander beabstandet. Die gemeinsame Draufsicht, in der die zweite Führungsbahn relativ zur ersten Führungsbahn geneigt ist, kann insbesondere eine Sicht orthogonal zu einer der Bahnebenen, vorzugsweise zu den mehreren parallelen Bahnebenen sein.

Die Schiebetür ist längs der Führungsbahnen zwischen einer Schließposition, in der sie die Öffnung des Gestells ganz oder wenigstens zu einem überwiegenden Teil verschließt, und einer geöffneten Position, in der sie die Öffnung wenigstens teilweise freigibt, in Verschieberichtung hin und her bewegbar. Eine oder mehrere der Führungsbahnen kann oder können zu einer horizontalen Ebene geneigt sein, so dass die Schwerkraft eine Bewegung der Schiebetür in Richtung auf die Schließposition unterstützt. In derartigen Ausführungen fällt wenigstens eine der Führungsbahnen in Richtung auf die Schließposition nach unten ab. Die Neigung zur Horizontalen ist vorteilhafterweise kleiner als 30° oder kleiner als 20°.

Die Schiebetür ist mittels der Eingriffsglieder und Gelenke mit dem Gestell vorteilhafterweise derart gekoppelt, dass sie im Führungseingriff der Eingriffsglieder und über die Gelenke getragen auf einer durch die Führungsbahnen vorgegebenen, virtuellen Trajektorie translatorisch und rotatorisch geführt wird. Die Kopplung ist in vorteilhaften Ausführungen eine Zwangsführung, so dass die Verschiebebewegung längs der Führungsbahnen die Rotationsbewegung der Schiebetür vorgibt, die Schiebetür also in die Rotation zwingt.

Das Schiebetürsystem kann ein dem ersten Eingriffsglied zugeordnetes erstes Befestigungselement und ein dem zweiten Eingriffsglied zugeordnetes zweites Befestigungselement umfassen. Das erste Befestigungselement kann mit der Schiebetür zur Übertragung von Kraft und/oder Drehmoment an der ersten Koppelstelle der Schiebetür gefügt und mit dem ersten Eingriffsglied über das erste Gelenk beweglich gekoppelt sein. Das zweite Befestigungselement kann mit der Schiebetür zur Übertragung von Kraft und/oder Drehmoment an der zweiten Koppelstelle der Schiebetür in einem in Längsrichtung der ersten Führungsbahn und/oder der zweiten Führungsbahn gemessenen Abstand von der ersten Koppelstelle gefügt und mit dem zweiten Eingriffsglied über das zweite Gelenk beweglich gekoppelt sein. Sind die dritte Führungsbahn und das dritte Eingriffsglied vorhanden, kann das Schiebetürsystem ein dem dritten Eingriffsglied zugeordnetes drittes Befestigungselement umfassen, das mit der Schiebetür zur Übertragung von Kraft und/oder Drehmoment an der dritten Koppelstelle der Schiebetür gefügt ist. Das dritte Befestigungselement kann über das dritte Gelenk beweglich mit dem dritten Eingriffsglied gekoppelt sein. Das erste Befestigungselement und/oder das zweite Befestigungselement und/oder das dritte Befestigungselement, falls letzteres vorhanden ist, kann oder können mit der Schiebetür zwar grundsätzlich beweglich verbunden sein, bevorzugt ist oder sind das erste Befestigungselement und/oder das zweite Befestigungselement und/oder das dritte Befestigungselement, falls letzteres vorhanden ist, mit der Schiebetür aber unbeweglich verbunden.

Das erste Eingriffsglied kann mit dem ersten Befestigungselement das erste Gelenk bilden. Das zweite Eingriffsglied kann mit dem zweiten Befestigungselement das zweite Gelenk bilden. Sind das dritte Eingriffsglied und das dritte Befestigungselement vorhanden, können diese beiden Koppelglieder miteinander das dritte Gelenk bilden. Das jeweilige Eingriffsglied kann mit dem zugeordneten Befestigungselement beispielsweise ein Drehgelenk oder Schwenkgelenk mit einer Rotationsachse bilden. Das jeweilige Paar aus Eingriffsglied und zugeordnetem Befestigungselement kann somit direkt das jeweilige Gelenk bilden. Grundsätzlich kann das erste Eingriffsglied aber auch über mehrere Gelenke mit dem ersten Befestigungselement und/oder kann das zweite Eingriffsglied über mehrere Gelenke mit dem zweiten Befestigungselement und/oder kann das dritte Eingriffsglied, falls vorhanden, über mehrere Gelenke mit dem dritten Befestigungselement beweglich gekoppelt sein. Eine bewegliche Kopplung mittels jeweils nur eines einzigen Gelenks wird jedoch bevorzugt.

Das erste Gelenk und/oder das zweite Gelenk und/oder das dritte Gelenk, falls vorhanden, kann oder können jeweils ein Drehgelenk sein. Die Gelenkachse des jeweiligen Drehgelenks ist für die Schiebetür eine Rotationsachse. Die Gelenkachse des jeweiligen Drehgelenks weist quer zur Längsrichtung der Führungsbahn, längs der das jeweilige Drehgelenk geführt wird, und kann zu dieser zugeordneten Führungsbahn schräg geneigt oder insbesondere orthogonal sein, wobei ein etwaiger Neigungswinkel zur Längsrichtung in vorteilhaften Ausführungen kleiner als 30° oder kleiner als 20° ist. Sind das erste Gelenk und das zweite Gelenk jeweils ein Drehgelenk, können ihre Gelenkachsen parallel sein. Ist das erste Gelenk ein Drehgelenk und ist ist das dritte Gelenk vorhanden und als Drehgelenk gebildet, können ihre Gelenkachsen parallel sein.

Das erste Gelenk kann eine quer zur ersten Führungsbahn erstreckte erste Gelenkachse aufweisen. Das zweite Gelenk kann eine quer zur zweiten Führungsbahn erstreckte zweite Gelenkachse aufweisen. Das dritte Gelenk, falls vorhanden, kann eine quer zur dritten Führungsbahn erstreckte dritte Gelenkachse aufweisen. Die jeweilige Gelenkachse kann orthogonal oder mit einer Neigung schräg zur zugeordneten Führungsbahn weisen. Die erste Gelenkachse und/oder die zweite Gelenkachse und/oder die dritte Gelenkachse, falls vorhanden, kann oder können die jeweils zugeordnete Führungsbahn schneiden oder in einem Abstand kreuzen. Die erste Gelenkachse und/oder die zweite Gelenkachse und/oder die dritte Gelenkachse, falls vorhanden, kann oder können jeweils eine Translationsachse und das jeweilige Gelenk ein Schubgelenk sein. Bevorzugt ist die erste Gelenkachse und/oder ist die zweite Gelenkachse und/oder ist die dritte Gelenkachse, falls vorhanden, eine Rotationsachse und das jeweilige Gelenk ein Drehgelenk oder Schwenkgelenk, in dem die Schiebetür relativ zum jeweiligen Eingriffsglied um die jeweilige Rotationsachse drehbar oder schwenkbar ist. In derartigen Ausführungen kann das erste Befestigungselement ein Schwenkarm um die Gelenkachse des ersten Gelenks und/oder kann das zweite Befestigungselement ein Schwenkarm um die Gelenkachse des zweiten Gelenks bilden. Sind ein drittes Gelenk und ein drittes Befestigungselement vorhanden, kann das dritte Befestigungselement ein Schwenkarm um die Gelenkachse des dritten Gelenks bilden.

Das erste Eingriffsglied kann im Führungseingriff mit der ersten Führungsbahn und/oder das zweite Eingriffsglied kann im Führungseingriff mit der zweiten Führungsbahn ein reines Schubgelenk bilden. In einer Variante kann das erste Eingriffsglied im Führungseingriff mit der ersten Führungsbahn und/oder kann das zweite Eingriffsglied im Führungseingriff mit der zweiten Führungsbahn ein Drehschubgelenk bilden, so dass das jeweilige Eingriffsglied im Führungseingriff längs der zugeordneten Führungsbahn translatorisch und um eine in Längsrichtung der zugeordneten Führungsbahn weisende Achse rotatorisch beweglich ist. Das dritte Eingriffsglied und die dritte Führungsbahn, falls vorhanden, können miteinander ein reines Schubgelenk bilden. Sie können miteinander aber auch ein Drehschubgelenk bilden, so dass das dritte Eingriffsglied im Führungseingriff längs der dritten Führungsbahn translatorisch und um eine in Längsrichtung der dritten Führungsbahn weisende Achse rotatorisch beweglich ist. Ein oder mehrere Drehschubgelenke der genannten Art ermöglichen der Schiebetür zusätzliche Ausgleichsbewegungen relativ zum Gestell. Hierzu genügt eine Drehbeweglichkeit des ersten Eingriffsglieds und/oder des zweiten Eingriffsglieds und/oder des dritten Eingriffsglieds um die jeweilige Führungsbahn um wenige Winkelgrad, beispielsweise um weniger als 5° oder weniger als 10°.

Das Schiebetürsystem kann einen Rastmechanismus umfassen, um die Schiebetür in der geöffneten Position und/oder in einer oder mehreren Positionen zwischen der Schließposition und der geöffneten Position lösbar zu fixieren. So kann eines aus Führungsbahn und zugeordnetem Eingriffsglied ein Rastglied hin und her beweglich lagern und das andere aus gleicher Führungsbahn und zugeordnetem Eingriffsglied wenigstens ein Rastgegenglied für einen Rasteingriff mit dem Rastglied aufweisen. Das Rastglied rastet vorteilhafterweise automatisch in den Rasteingriff. Der Rasteingriff ist vorteilhafterweise durch manuelle Betätigung, ohne Werkzeug, lösbar. Das Rastglied kann mittels Federkraft in den Rasteingriff gespannt werden, so dass der Rasteingriff gegen die Federkraft lösbar ist.

In bevorzugten Ausführungen sind das Rastglied am Eingriffsglied, beispielsweise am ersten Eingriffsglied, und längs der zugeordneten Führungsbahn, beispielsweise der ersten Führungsbahn, mehrere in Längsrichtung voneinander beabstandete Rastgegenglieder jeweils für einen Rasteingriff mit dem Rastglied vorgesehen, so dass die Schiebetür den Positionen der Rastgegenglieder längs der Führungsbahn entsprechend in unterschiedlichen Verschiebepositionen durch lösbaren Rasteingriff fixierbar ist. Dabei kann eines der mehreren Rastgegenglieder so geformt sein, dass zur Lösung des Rasteingriffs eine Betätigung des Rastglieds erforderlich ist, während das andere oder die mehreren anderen Rastgegenglieder so geformt sein kann oder können, dass der Rasteingriff durch Ausübung einer in Längsrichtung der Führungsbahn auf das Rastglied wirkenden Kraft zerstörungsfrei lösbar ist. Das jeweilige Rastgegenglied kann hierfür in wenigstens eine der zwei Längsrichtungen der Führungsbahn, vorzugsweise in beide Längsrichtungen, eine Rampe bilden

Die Erfindung betrifft auch ein Luftfahrzeug mit einer Zelle und einer Schiebetür zum Verschließen einer Öffnung der Zelle, vorzugsweise einer Ein- und Ausstiegsöffnung des Luftfahrzeugs, wobei das erfindungsgemäße Schiebetürsystem die Schiebetür und die Zelle das Gestell des Schiebetürsystems bilden. Das Luftfahrzeug kann insbesondere ein Drehflügler, beispielsweise ein Helikopter oder Gyrokopter oder eine Mischform aus Helikopter und Gyrokopter sein.

Auch in den nachstehend formulierten Aspekten werden Merkmale der Erfindung beschrieben. Die Aspekte sind in der Art von Ansprüchen formuliert und können diese ersetzen. In den Aspekten offenbarte Merkmale können die Ansprüche ferner ergänzen und/oder relativieren, Alternativen zu einzelnen Merkmalen aufzeigen und/oder Anspruchsmerkmale erweitern. In Klammern gesetzte Bezugszeichen beziehen sich auf nachfolgend in Figuren illustrierte Ausführungsbeispiele der Erfindung. Sie schränken die in den Aspekten beschriebenen Merkmale nicht unter dem Wortsinn als solchen ein, zeigen andererseits jedoch bevorzugte Möglichkeiten der Verwirklichung des jeweiligen Merkmals auf.

Aspekt 1# Schiebetürsystem mit einem Gestell (2), einer Schiebetür (8) zum Verschließen einer Öffnung (7) des Gestells (2) und einer Lageranordnung zur beweglichen Lagerung der Schiebetür (8), die Lageranordnung umfassend:
1.1 eine erste Führungsbahn (11) und eine zweite Führungsbahn (12), die jeweils am Gestell (2) angeordnet sind,
1.2 ein erstes Eingriffsglied (21), das in einem Führungseingriff mit der ersten Führungsbahn (11) in Längsrichtung (L11) der ersten Führungsbahn (11) beweglich ist, und
1.3 ein zweites Eingriffsglied (22), das in einem Führungseingriff mit der zweiten Führungsbahn (12) in Längsrichtung (L12) der zweiten Führungsbahn (12) beweglich ist, wobei
1.4 die Schiebetür (8) an einer ersten Koppelstelle mit dem ersten Eingriffsglied (21) und an einer zweiten Koppelstelle mit dem zweiten Eingriffsglied (22) gekoppelt ist, so dass die Schiebetür (8) einer Bewegung des ersten Eingriffsglieds (21) und einer Bewegung des zweiten Eingriffsglieds (22) folgt,
1.5 die erste Führungsbahn (11) und die zweite Führungsbahn (12) in einer Draufsicht mit einer Neigung (α) zueinander verlaufen,
1.6 das erste Eingriffsglied (21) über ein erstes Gelenk (21, 24) mit der ersten Koppelstelle und das zweite Eingriffsglied (22) über ein zweites Gelenk (22, 25) mit der zeiten Koppelstelle der Schiebetür (8) beweglich verbunden sind, und
1.7 die erste Koppelstelle der Schiebetür (8) in Bezug auf die Längsrichtung (L11) der ersten Führungsbahn (11) und/oder in Bezug auf die Längsrichtung (L12) der zweiten Führungsbahn (12) zur zweiten Koppelstelle der Schiebetür (8) versetzt ist.

Aspekt 2# Schiebetürsystem nach Aspekt 1, wobei das erste Eingriffsglied (21) im Führungseingriff mit der ersten Führungsbahn (11) und das zweite Eingriffsglied (22) im Führungseingriff mit der zweiten Führungsbahn (12) in Bezug auf die Längsrichtung (L11) der ersten Führungsbahn (11) und/oder in Bezug auf die Längsrichtung (L12) der zweiten Führungsbahn (12) zueinander versetzt sind.

Aspekt 3# Schiebetürsystem nach einem der vorhergehenden Aspekte, wobei die erste Führungsbahn (11) und/oder die zweite Führungsbahn (12) gerade ist oder jeweils sind.

Aspekt 4# Schiebetürsystem nach einem der vorhergehenden Aspekte, wobei die zweite Führungsbahn (12) zur ersten Führungsbahn (11) in Bezug auf die Längsrichtung (L11) der ersten Führungsbahn (11) und/oder in Bezug auf die Längsrichtung (L12) der zweiten Führungsbahn (12) versetzt ist.

Aspekt 5# Schiebetürsystem nach einem der vorhergehenden Aspekte, wobei sich die erste Führungsbahn (11) bis nahe zu einem seitlichen Rand der Öffnung (7) der Zelle (2) und die zweite Führungsbahn (12) in Überlappung mit der Öffnung (7) unterhalb eines unteren oder oberhalb eines oberen Rands der Öffnung (7) erstrecken.

Aspekt 6# Schiebetürsystem nach einem der vorhergehenden Aspekte, wobei die Neigung (α) wenigstens 2° oder wenigstens 3° ist.

Aspekt 7# Schiebetürsystem nach einem der vorhergehenden Aspekte, wobei die Neigung (α) höchstens 30° oder höchstens 20° ist.

Aspekt 8# Schiebetürsystem nach einem der vorhergehenden Aspekte, wobei die Lageranordnung ferner eine am Gestell (1) angeordnete dritte Führungsbahn (13) und ein drittes Eingriffsglied (23) umfasst, das dritte Eingriffsglied (23) in einem Führungseingriff mit der dritten Führungsbahn (13) in Längsrichtung (L13) der dritten Führungsbahn (13) beweglich ist, und wobei die Schiebetür (8) an einer dritten Koppelstelle mit dem dritten Eingriffsglied (23) gekoppelt ist, so dass die Schiebetür (8) einer Bewegung des dritten Eingriffsglieds (23) folgt.

Aspekt 9# Schiebetürsystem nach dem vorhergehenden Aspekt, wobei das dritte Eingriffsglied (23) über ein drittes Gelenk (23, 26) mit der dritten Koppelstelle der Schiebetür (8) gekoppelt ist.

Aspekt 10# Schiebetürsystem nach einem der zwei unmittelbar vorhergehenden Aspekte, wobei wobei die dritte Führungsbahn (13) zur ersten Führungsbahn (11) und zur zweiten Führungsbahn (12) in der Draufsicht jeweils eine Neigung aufweist, die kleiner als die Neigung (α) der ersten Führungsbahn (11) zur zweiten Führungsbahn (12) ist.

Aspekt 11# Schiebetürsystem nach einem der Aspekte 1 bis 9, die dritte Führungsbahn (13) und eine der anderen Führungsbahnen (11, 12) in der Draufsicht parallel sind.

Aspekt 12# Schiebetürsystem nach einem der vier unmittelbar vorhergehenden Aspekte, wobei die dritte Führungsbahn (13) gerade ist.

Aspekt 13# Schiebetürsystem nach einem der fünf unmittelbar vorhergehenden Aspekte, wobei die dritte Koppelstelle der Schiebetür (8) in Bezug auf die Längsrichtung (L11) der ersten Führungsbahn (11) und/oder in Bezug auf die Längsrichtung (L13) der dritten Führungsbahn (13) zur ersten Koppelstelle und/oder zur zweiten Koppelstelle der Schiebetür (8) versetzt ist.

Aspekt 14# Schiebetürsystem nach einem der sechs unmittelbar vorhergehenden Aspekte, wobei das zweite Eingriffsglied (22) und das dritte Eingriffsglied (23) in Bezug auf die Längsrichtung (L11) der ersten Führungsbahn (11) und/oder in Bezug auf die Längsrichtung (L13) der dritten Führungsbahn (13) zueinander versetzt sind.

Aspekt 15# Schiebetürsystem nach einem der sieben unmittelbar vorhergehenden Aspekte, wobei die dritte Führungsbahn (13) in Bezug auf die Längsrichtung (L11) der ersten Führungsbahn (11) und/oder in Bezug auf die Längsrichtung (L13) der dritten Führungsbahn (13) zur ersten Führungsbahn (11) versetzt ist.

Aspekt 16# Schiebetürsystem nach einem der vorhergehenden Aspekte, wobei sich die Führungsbahnen (11, 12, 13) jeweils in einer Bahnebene erstrecken.

Aspekt 17# Schiebetürsystem nach dem vorhergehenden Aspekt, wobei die Bahnebenen zueinander parallel und voneinander beabstandet sind.

Aspekt 18# Schiebetürsystem nach einem der vorhergehenden Aspekte, wobei die Schiebetür (8) längs der Führungsbahnen (11, 12, 13) zwischen einer Schließposition, in der sie die Öffnung (7) des Gestells (2) ganz oder wenigstens zu einem überwiegenden Teil verschließt, und einer geöffneten Position, in der sie die Öffnung (7) ganz oder wenigstens teilweise freigibt, hin und her bewegbar ist und eine oder mehrere der Führungsbahnen (11, 12, 13) zu einer horizontalen Ebene (X, Y) geneigt ist oder sind, so dass die Schwerkraft eine Bewegung der Schiebetür (8) in Richtung auf die Schließposition unterstützt.

Aspekt 19# Schiebetürsystem nach einem der vorhergehenden Aspekte, wobei die Führungsbahnen (11, 12, 13) quer zur Längsrichtung (L11) der ersten Führungsbahn (11) zueinander versetzt sind.

Aspekt 20# Schiebetürsystem nach einem der vorhergehenden Aspekte, wobei die Führungsbahnen (11, 12, 13) in eine erste Richtung quer zur Längsrichtung (L11) der ersten Führungsbahn (11) und in eine zweite Richtung quer zur Längsrichtung (L11) der ersten Führungsbahn (11) zueinander versetzt sind und die erste Richtung orthogonal zur zweiten Richtung weist.

Aspekt 21# Schiebetürsystem nach einem der vorhergehenden Aspekte, wobei die Schiebetür (8) im Führungseingriff der Eingriffsglieder (21, 22, 23) und über die Gelenke (21, 24; 22, 25; 23, 26) getragen auf einer vorgegebenen, virtuellen Trajektorie translatorisch und rotatorisch zwangsgeführt wird.

Aspekt 22# Schiebetürsystem nach einem der vorhergehenden Aspekte, die Lageranordnung ferner umfassend:
- ein erstes Befestigungselement (24), das mit der Schiebetür (8) an der ersten Koppelstelle der Schiebetür (8) zur Übertragung von Kraft und/oder Drehmoment gefügt und mit dem ersten Eingriffsglied (21) über das erste Gelenk (21, 24) beweglich gekoppelt ist, und
- ein zweites Befestigungselement (25), das mit der Schiebetür (8) an der zweiten Koppelstelle der Schiebetür (8) zur Übertragung von Kraft und/oder Drehmoment gefügt und mit dem zweiten Eingriffsglied (22) über das zweite Gelenk (22, 25) beweglich gekoppelt ist,
- optional ein drittes Befestigungselement (26), das mit der Schiebetür (8) an einer dritten Koppelstelle der Schiebetür (8) zur Übertragung von Kraft und/oder Drehmoment gefügt und mit dem dritten Eingriffsglied (23) nach Aspekt 5, falls vorhanden, über ein drittes Gelenk (23, 26) beweglich gekoppelt ist.

Aspekt 23# Schiebetürsystem nach dem vorhergehenden Aspekt, wobei das erste Befestigungselement (24) und/oder das zweite Befestigungselement (25) und/oder das dritte Befestigungselement (26), falls vorhanden, mit der Schiebetür (8) unbeweglich verbunden ist oder jeweils sind.

Aspekt 24# Schiebetürsystem nach einem der zwei unmittelbar vorhergehenden Aspekte, wobei das erste Eingriffsglied (21) mit dem ersten Befestigungselement (24) das erste Gelenk (21, 24) und/oder das zweite Eingriffsglied (22) mit dem zweiten Befestigungselement (25) das zweite Gelenk (22, 25) und/oder das dritte Eingriffsglied (23), falls vorhanden, mit dem dritten Befestigungselement (26), falls vorhanden, das dritte Gelenk (23, 26) bildet oder jeweils bilden.

Aspekt 25# Schiebetürsystem nach einem der vorhergehenden Aspekte, wobei die Schiebetür (8) abgesehen von Lagerspiel und einer etwaigen formbedingten Elastizität der Schiebetür relativ zum ersten Eingriffsglied (11) und/oder relativ zum zweiten Eingriffsglied (12) und/oder relativ zum dritten Eingriffsglied (13), falls vorhanden, nur rotatorisch beweglich ist.

Aspekt 26# Schiebetürsystem nach einem der vorhergehenden Aspekte, wobei die erste Koppelstelle der Schiebetür (8) abgesehen von Lagerspiel relativ zum ersten Eingriffsglied (11) nur rotatorisch und nur um eine erste Rotationsachse (P11) und/oder die zweite Koppelstelle der Schiebetür (8) abgesehen von Lagerspiel relativ zum zweiten Eingriffsglied (12) nur rotatorisch und nur um eine zweite Rotationsachse (P12) und/oder die dritte Koppelstelle der Schiebetür (8), falls vorhanden, abgesehen von Lagerspiel relativ zum dritten Eingriffsglied (13), falls vorhanden, nur rotatorisch und nur um eine dritte Rotationsachse (P13) beweglich ist oder jeweils sind.

Aspekt 27# Schiebetürsystem nach dem vorhergehenden Aspekt, wobei sich die Führungsbahnen (11, 12, 13) jeweils in einer Bahnebene erstrecken und die Bahnebenen zueinander parallel sind, und wobei die Rotationsachsen (P11, P12, P13) zueinander parallel sind und in eine Richtung quer zu den Bahnebenen, vorzugsweise orthogonal zu den Bahnebenen weisen.

Aspekt 28# Schiebetürsystem nach einem der vorhergehenden Aspekte, wobei das erste Gelenk (21, 24) ein Dreh- oder Schwenkgelenk und/oder das zweite Gelenk (22, 25) ein Dreh- oder Schwenkgelenk und/oder das dritte Gelenk (23, 26), falls vorhanden, ein Dreh- oder Schwenkgelenk ist oder jeweils sind.

Aspekt 29# Schiebetürsystem nach einem der vorhergehenden Aspekte, wobei das erste Gelenk (21, 24) eine quer zur ersten Führungsbahn (11) erstreckte Gelenkachse (P11) und/oder das zweite Gelenk (22, 25) eine quer zur zweiten Führungsbahn (22) erstreckte Gelenkachse (P12) und/oder das dritte Gelenk (23, 26), falls vorhanden, eine quer zur dritten Führungsbahn (13) erstreckte Gelenkachse (P13) aufweist oder aufweisen und die Schiebetür (8) relativ zum jeweiligen Eingriffsglied (21, 22, 23) um die jeweilige Gelenkachse (P11, P12, P13) rotatorisch beweglich, beispielsweise schwenkbeweglich oder nur drehbeweglich, ist.

Aspekt 30# Schiebetürsystem nach dem vorhergehenden Aspekt, wobei die Gelenkachse (P11) des ersten Gelenks (21, 24) parallel zur Gelenkachse (P12) des zweiten Gelenks (22, 25) und/oder parallel zur Gelenkachse (P13) des dritten Gelenks (23, 26), falls vorhanden, ist.

Aspekt 31# Schiebetürsystem nach einem der zwei unmittelbar vorhergehenden Aspekte, wobei sich die Führungsbahnen (11, 12, 13) jeweils in einer Bahnebene erstrecken und die Bahnebenen zueinander parallel sind, und wobei die Gelenkachsen (P11, P12, P13) orthogonal zu den Bahnebenen weisen.

Aspekt 32# Schiebetürsystem nach einem der drei unmittelbar vorhergehenden Aspekte, wobei die Gelenkachse (P11) des ersten Gelenks (21, 24) orthogonal zur ersten Führungsbahn (11) und/oder die Gelenkachse (P12) des zweiten Gelenks (22, 25) orthogonal zur zweiten Führungsbahn (12) und/oder, falls das dritte Gelenk und die dritte Führungsbahn vorhanden sind, die Gelenkachse (P13) des dritten Gelenks (23, 26) orthogonal zur dritten Führungsbahn (13) ist oder jeweils sind.

Aspekt 33# Schiebetürsystem nach einem der vorhergehenden Aspekte, wobei das erste Gelenk (21, 24) und/oder das zweite Gelenk (22, 25) und/oder das dritte Gelenk (23, 26), falls vorhanden, ein Drehgelenk ist oder jeweils sind und die Schiebetür (8) um eine Gelenkachse (P11) des ersten Gelenks (21, 24) und/oder um eine Gelenkachse (P12) des zweiten Gelenks (22, 25) und/oder um eine Gelenkachse (P13) des dritten Gelenks (23, 26) drehbar oder schwenkbar ist.

Aspekt 34# Schiebetürsystem nach dem vorhergehenden Aspekt und Aspekt 22, wobei das erste Befestigungselement (24) einen Schwenkarm um die Gelenkachse (P11) des ersten Gelenks (21, 24) und/oder das zweite Befestigungselement (25) einen Schwenkarm um die Gelenkachse (P12) des zweiten Gelenks (22, 25) und/oder das dritte Befestigungselement (26), falls vorhanden, einen Schwenkarm um die Gelenkachse (P13) des dritten Gelenks (23, 26), falls vorhanden, bildet oder bilden.

Aspekt 35# Schiebetürsystem nach einem der vorhergehenden Aspekte, wobei das erste Eingriffsglied (21) um eine in Längsrichtung (L11) der ersten Führungsbahn (11) weisende Achse (L11) rotatorisch beweglich ist und/oder das zweite Eingriffsglied (22) um eine in Längsrichtung (L12) der zweiten Führungsbahn (12) weisende Achse (L12) rotatorisch beweglich ist und/oder das dritte Eingriffsglied (13), falls vorhanden, um eine in Längsrichtung (L13) der dritten Führungsbahn (13) weisende Achse (L13) rotatorisch beweglich ist oder sind.

Aspekt 36# Schiebetürsystem nach einem der vorhergehenden Aspekte, wobei das erste Eingriffsglied (21) im Führungseingriff mit der ersten Führungsbahn (11) und/oder das zweite Eingriffsglied (22) im Führungseingriff mit der zweiten Führungsbahn (12) und/oder das dritte Eingriffsglied (23), falls vorhanden, im Führungseingriff mit der dritten Führungsbahn (13) ein Drehschubgelenk bildet oder bilden.

Aspekt 37# Schiebetürsystem nach einem der vorhergehenden Aspekte, wobei das erste Eingriffsglied (21) einen Schwenkarm um die erste Führungsbahn (11) und/oder das zweite Eingriffsglied (22) einen Schwenkarm um die zweite Führungsbahn (12) und/oder das dritte Eingriffsglied (23) einen Schwenkarm um die dritte Führungsbahn (13), falls vorhanden, bildet oder bilden.

Aspekt 38# Schiebetürsystem nach einem der vorhergehenden Aspekte, wobei die erste Führungsbahn (11) von einer ersten Führungsschiene (11, 14) und/oder die zweite Führungsbahn (12) von einer zweiten Führungsschiene (12, 15) und/oder die dritte Führungsbahn (13), falls vorhanden, von einer dritten Führungsschiene (13, 16) gebildet wird oder werden und die jeweilige Führungsschiene separat vom Gestell (2) gefertigt und mit dem Gestell (2) unbeweglich gefügt ist.

Aspekt 39# Schiebetürsystem nach dem vorhergehenden Aspekt, wobei die jeweilige Führungsschiene ein Führungsprofil (11, 12, 13), beispielsweise in Form eines runden Profilstabs, und ein Leistenprofil (14, 15, 16) umfassen, das vom Führungsprofil der gleichen Führungsschiene seitlich vorragt.

Aspekt 40# Schiebetürsystem nach einem der vorhergehenden Aspekte, wobei eines der Eingriffsglieder (11, 12, 13), beispielsweise das erste Eingriffsglied (21), ein Rastglied (28) hin und her beweglich lagert und die zugeordnete Führungsbahn (11), beispielsweise die erste Führungsbahn (11), wenigstens ein Rastgegenglied (18, 19) für einen Rasteingriff mit dem Rastglied (28) aufweist.

Aspekt 41# Schiebetürsystem nach dem vorhergehenden Aspekt, wobei das Rastglied (28) mittels Federkraft in den Rasteingriff gespannt wird und der Rasteingriff gegen die Federkraft lösbar ist.

Aspekt 42# Schiebetürsystem nach einem der zwei unmittelbar vorhergehenden Aspekte, wobei
- längs der zugeordneten Führungsbahn (11) wenigstens ein erstes Rastgegenglied (18) und hiervon in Längsrichtung (L11) der zugeordneten Führungsbahn (11) beabstandet ein zweites Rastgegenglied (19) jeweils für einen Rasteingriff mit dem Rastglied (28) vorgesehen sind,
- das erste Rastgegenglied (18) so geformt ist, dass zur Lösung des Rasteingriffs eine Betätigung des Rastglieds (28) erforderlich ist, und
- das zweite Rastgegenglied (19) so geformt ist, dass der Rasteingriff durch Ausübung einer in Längsrichtung (L11) der zugeordneten Führungsbahn (11) auf das Rastglied (28) wirkenden Kraft zerstörungsfrei lösbar ist.

Aspekt 43# Luftfahrzeug mit einer Zelle und einer Schiebetür zum Verschließen einer Öffnung der Zelle, vorzugsweise einer Ein- und Ausstiegsöffnung des Luftfahrzeugs, wobei das Schiebetürsystem nach einem der vorhergehenden Aspekte die Schiebetür (8) und die Zelle im Bereich um die Öffnung (7) das Gestell (2) des Schiebetürsystems bilden.

Aspekt 44# Luftfahrzeug nach dem vorhergehenden Aspekt, wobei das Luftfahrzeug ein Drehflügler, beispielsweise ein Gyrokopter, ist.

Nachfolgend wird ein Ausführungsbeispiel der Erfindung anhand von Figuren erläutert. Am Ausführungsbeispiel offenbar werdende Merkmale bilden jeweils einzeln und in jeder Merkmalskombination die Gegenstände der Ansprüche, der Aspekte und auch die vorstehend erläuterten Ausgestaltungen vorteilhaft weiter. Es zeigen:
- Figur 1: eine Isometrie eines Luftfahrzeugs mit einer Schiebetür, die eine Ein- und Ausstiegsöffnung des Luftfahrzeugs verschließt,
- Figur 2: eine Isometrie des Luftfahrzeugs bei geöffneter Schiebetür,
- Figur 3: das Luftfahrzeug in einer Seitenansicht auf die geschlossene Schiebetür,
- Figur 4: eine Zelle des Luftfahrzeugs in einer Draufsicht auf eine Oberseite,
- Figur 5: die Zelle in einer Seitenansicht auf die Ein- und Ausstiegsöffnung vor Montage der Schiebetür,
- Figur 6: eine Draufsicht auf Führungsbahnen und Eingriffsglieder einer Lageranordnung zur beweglichen Lagerung der Schiebetür,
- Figur 7: eine Stirnansicht der Schiebetür im montierten Zustand, wobei die Zelle des Luftfahrzeugs nicht dargestellt ist,
- Figur 8: eine Seitenansicht auf eine Innenseite der Schiebetür im montierten Zustand, wobei die Zelle des Luftfahrzeugs nicht dargestellt ist,
- Figur 9: eine erste Führungsbahn mit ersten Koppelgliedern zum Koppeln der Schiebetür mit der ersten Führungsbahn,
- Figur 10: eine zweite Führungsbahn mit zweiten Koppelgliedern zum Koppeln der Schiebetür mit der zweiten Führungsbahn,
- Figur 11: eine dritte Führungsbahn mit dritten Koppelgliedern zur Kopplung der Schiebetür mit der dritten Führungsbahn, und
- Figur 12: die erste Führungsbahn und ersten Koppelglieder mit montierter Schiebetür in einer isometrischen Sicht auf eine Koppelstelle der Schiebetür.

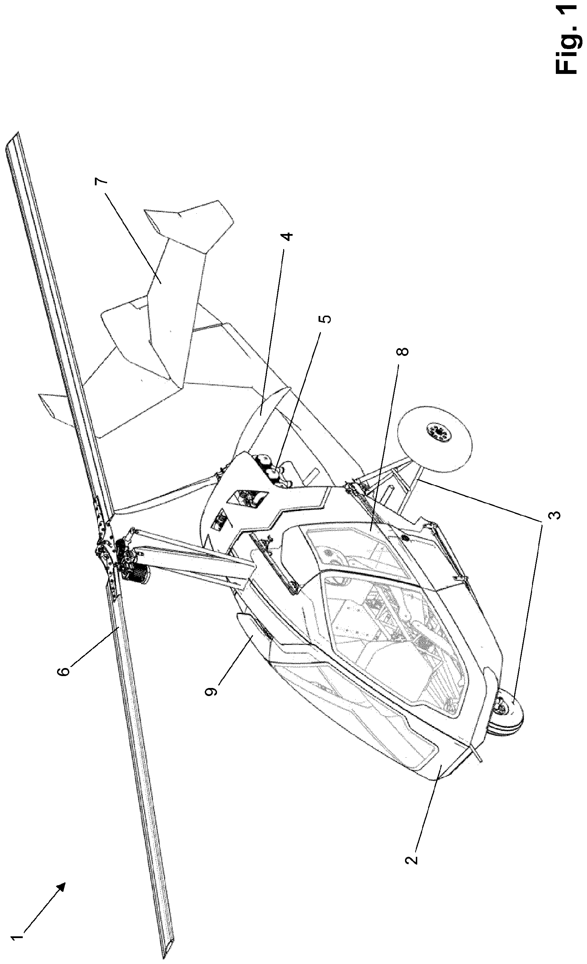

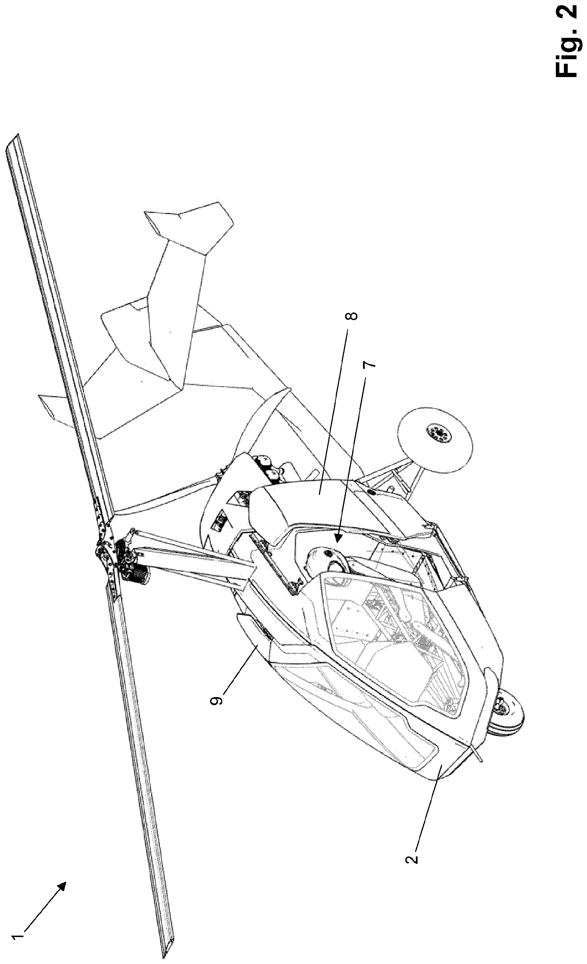

Die Figuren 1 und 2 zeigen ein Luftfahrzeug 1 jeweils in einer Isometrie. Bei dem Luftfahrzeug 1 handelt es sich um einen Drehflügler, der beispielhaft als Gyrokopter gebildet ist. Das Luftfahrzeug 1 kann für die Beförderung von Fluggästen und/oder Frachten konzipiert sein. Insbesondere kann es sich um ein Flugtaxi handeln.

Das Luftfahrzeug 1 weist eine Zelle 2 auf, die so gestaltet ist, dass sie mehrere Personen aufnehmen kann, im Ausführungsbeispiel einen Piloten und einen Fluggast. Sie weist eine seitliche Einstiegs- und Ausstiegsöffnung 7 (Figur 2) für den Piloten und spiegelbildlich auf der anderen Seite eine weitere Einstiegs- und Ausstiegsöffnung für beispielsweise einen Fluggast auf. Die Ein- und Ausstiegsöffnung 7 ist mittels einer Schiebetür 8 verschließbar. Die Schiebetür 8 nimmt in Figur 1 eine Schließposition ein, in der sie die Einstiegs- und Ausstiegsöffnung 7 vollständig verschließt. In Figur 2 nimmt die Schiebetür 8 eine vollständig geöffnete Position ein, in der sie die Einstiegs- und Ausstiegsöffnung 7 freigibt. Die weitere Schiebetür 9 auf der anderen Seite der Zelle 2 ist in den Figuren 1 und 2 im Schließzustand dargestellt.

An der Unterseite der Zelle 2 ist ein Fahrgestell 3 mit Reifen angeordnet, damit das Luftfahrzeug 1 am Boden Rollbewegungen ausführen kann. An einer Rückseite der Zelle 2 sind ein Propeller 4 und ein Antriebsmotor 5 für den Propeller 4 angeordnet, die der Bauweise als Gyrokopter entsprechend für den Vortrieb des Luftfahrzeugs 1 sorgen. Für den erforderlichen Auftrieb sorgt ein über der Zelle 2 angeordneter, an der Zelle 2 abgestützter Rotor 6, der um eine nahezu vertikale Rotationsachse drehbar ist, wobei die Rotationsachse eine gewisse Neigung zur Vertikalen und die Rotorblätter beim Start und im Horizontalflug eine gewisse Anstellung zur Richtung der Vorwärtsbewegung des Luftfahrzeugs 1 aufweisen. Der Vollständigkeit wegen sei auf ein Höhen- und Seitenleitwerk am Heck des Luftfahrzeugs 1 hingewiesen.

Mit Ausnahme eines speziellen Schiebetürsystems, das die Schiebetür 8 umfasst, und vorzugsweise eines spiegelbildlich auf der gegenüberliegenden Seite der Zelle 2 vorgesehenen weiteren Schiebetürsystems, das die Schiebetür 9 umfasst, kann das Luftfahrzeug 1 wie für Gyrokopter üblich gebildet sein. Die beiden Schiebetürensysteme können von der spiegelbildlichen Anordnung abgesehen identisch sein.

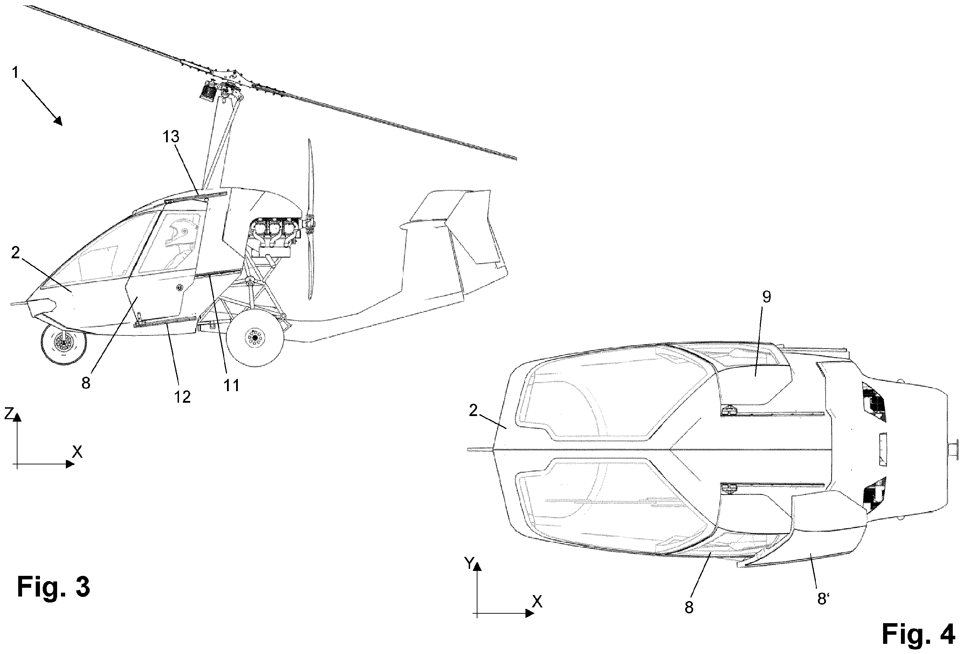

Figur 3 zeigt das Luftfahrzeug 1 in Horizontalfluglage in einer Seitenansicht auf die Schiebetür 8. Im linken unteren Figurenbereich sind die gegen die Flugrichtung weisende horizontale X-Achse und die Hochachse Z eines raumfesten kartesischen Koordinatensystems eingetragen. Die Schiebetür 8 befindet sich in Schließposition. An der Zelle 2 sind eine erste Führungsbahn 11, eine zweite Führungsbahn 12 und eine dritte Führungsbahn 13 angeordnet. Die Führungsbahnen 11, 12 und 13 sind Bestandteil einer Lageranordnung zur beweglichen Lagerung und Führung der Schiebetür 8. Sie erstrecken sich jeweils in eine Verschieberichtung der Schiebetür 8. Jede der Führungsbahnen 11, 12 und 13 kann von jeweils einer Führungsschiene gebildet werden, die separat von der Zelle 2 gefertigt und dauerhaft fest mit der Zelle 2 gefügt ist. Die Führungsschienen mit den Führungsbahnen 11, 12 und 13 können mit der Zelle 2 stoffschlüssig, beispielsweise mittels Schweißverbindung und/oder Klebeverbindung, und/oder formschlüssig und/oder reibschlüssig, beispielsweise mittels Schraubverbindung und/oder Nietverbindung, gefügt sein.

Figur 4 ist eine Draufsicht auf die Zelle 2 des Luftfahrzeugs 1, wobei die Zelle 2 in ihrer Horizontalfluglage dargestellt ist. Die beiden Schiebetüren 8 und 9 befinden sich jeweils in der Schließposition. Die linke Schiebetür 8 ist lediglich zu Vergleichszwecken auch in der geöffneten Position dargestellt und in der geöffneten Position mit dem Bezugszeichen 8' bezeichnet. Bei der Bewegung aus der Schließposition in die geöffnete Position führt die Schiebetür 8 eine Translationsbewegung in die Verschieberichtung und der Translationsbewegung überlagert eine Rotationsbewegung um eine quer zur Verschieberichtung weisende Rotationsachse aus. Die Schiebetür 8 bewegt sich aufgrund der Überlagerung aus Translation und Rotation auf einer Trajektorie, die an die Form der Zelle 2 angepasst ist. Die Zelle 2 ist an den Seiten strömungsgünstig gewölbt, indem sie sich gegen die Flugrichtung, das heißt in X-Richtung, vom vorderen Endbereich der Zelle 2 bis in den Bereich der jeweiligen Ein- und Ausstiegsöffnung aufweitet und aus dem Bereich der Ein- und Ausstiegsöffnung in Richtung Heck wieder schmaler wird. Im Ergebnis ist die Zelle 2 in der Draufsicht um die jeweilige Einstiegs- und Ausstiegsöffnung konvex rund gewölbt. Die Lageranordnung für die Schiebetür 8, und ebenso die Lageranordnung für die Schiebetür 9, sorgt dafür, dass sich die Schiebetüren 8 und 9 jeweils auf einer an die runde Wölbung der Zelle 2 angepassten Trajektorie bewegen und sich somit in den unterschiedlichen Verschiebepositionen weitestgehend an die Zelle 2 anschmiegen.

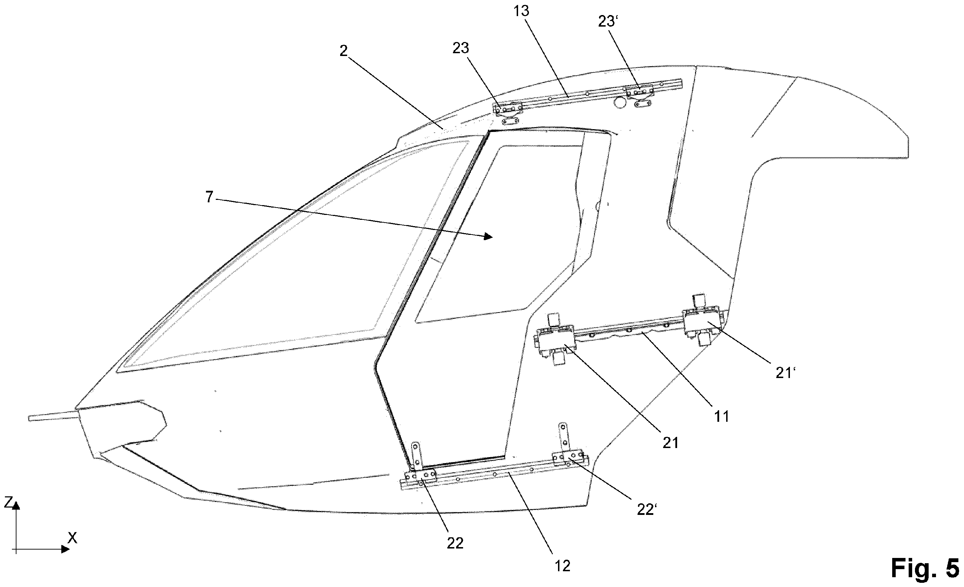

Figur 5 zeigt ebenfalls in Horizontalfluglage nur die Zelle 2 des Luftfahrzeugs 1 in der gleichen Seitenansicht wie Figur 3, aber ohne die Schiebetür 8, so dass die Führungsbahnen 11, 12 und 13 über ihre volle Länge und die Einstiegs- und Ausstiegsöffnung 7 über ihren vollen Querschnitt sichtbar sind. Die Lageranordnung umfasst über die Führungsbahnen 11, 12 und 13 hinaus ein erstes Eingriffsglied 21, das mit der ersten Führungsbahn 11 in einem ersten Führungseingriff und im ersten Führungseingriff längs der ersten Führungsbahn 11 hin und her beweglich ist. Ein zweites Eingriffsglied 22 der Lageranordnung ist mit der zweiten Führungsbahn 12 in einem Führungseingriff und in diesem Führungseingriff längs der zweiten Führungsbahn 12 hin und her beweglich. Die Lageranordnung umfasst noch ein drittes Eingriffsglied 23, das mit der dritten Führungsbahn 13 in einem dritten Führungseingriff und im dritten Führungseingriff längs der dritten Führungsbahn 13 hin und her beweglich ist.

Die Eingriffsglieder 21, 22 und 23 sind in Figur 5 jeweils in einer ersten Position dargestellt, in der sie sich befinden, wenn die Schiebetür 8 die Schließposition einnimmt. Zusätzlich sind die gleichen Eingriffsglieder 21, 22 und 23 jeweils in einer zweiten Position dargestellt und in ihren zweiten Positionen mit den gleichen, lediglich apostrophierten Bezugszeichen 21', 22' und 23' bezeichnet. Die zweiten Positionen entsprechen der vollständig geöffneten Position der Schiebetür 8. Im Ausführungsbeispiel befindet sich die erste Position in Flugrichtung vor der zweiten Position.

Die Führungsbahnen 12 und 13 erstrecken sich unterhalb eines unteren Rands und oberhalb eines oberen Rands der Öffnung 7 und in Bezug auf die Verschieberichtung der Schiebetür 8 in Überlappung mit der Öffnung 7. Die erste Führungsbahn 11 erstreckt sich neben der Öffnung 7 bis nahe zu einem seitlichen Rand der Öffnung 7. Sie ist in Bezug auf ihre eigene Längsrichtung zur zweiten Führungsbahn 12 versetzt. Die Führungsbahn 11 erstreckt sich in Richtung auf einen bezüglich der Hochachse Z mittleren Bereich der Öffnung 7, was der Steifigkeit der Führung der Schiebetür 8 zuträglich ist.

Die Führungsbahnen 11, 12 und 13 können in der Seitenansicht, d.h. in einer Parallelprojektion auf eine X-Z-Ebene, vorteilhafterweise parallel sein. Sie können in der Horizontalfluglage der Zelle 2 in Richtung auf die Schließposition abfallen, um die Verschiebebewegung der Schiebetür 8 beim Schließen der Öffnung 7 durch Schwerkraft zu unterstützen.

Die Führungsbahn 11 erstreckt sich in einer ersten Bahnebene. Die Führungsbahn 12 erstreckt sich in einer zweiten Bahnebene, und die Führungsbahn 13 erstreckt sich in einer dritten Bahnebene. Die Bahnebenen weisen zwischen den Endpunkten der Führungsbahnen in Richtung der Hochachse Z gemessen jeweils paarweise einen Abstand voneinander auf. Die Bahnebenen können insbesondere parallel sein und die Abstände orthogonal zu den Bahnebenen gemessen werden..

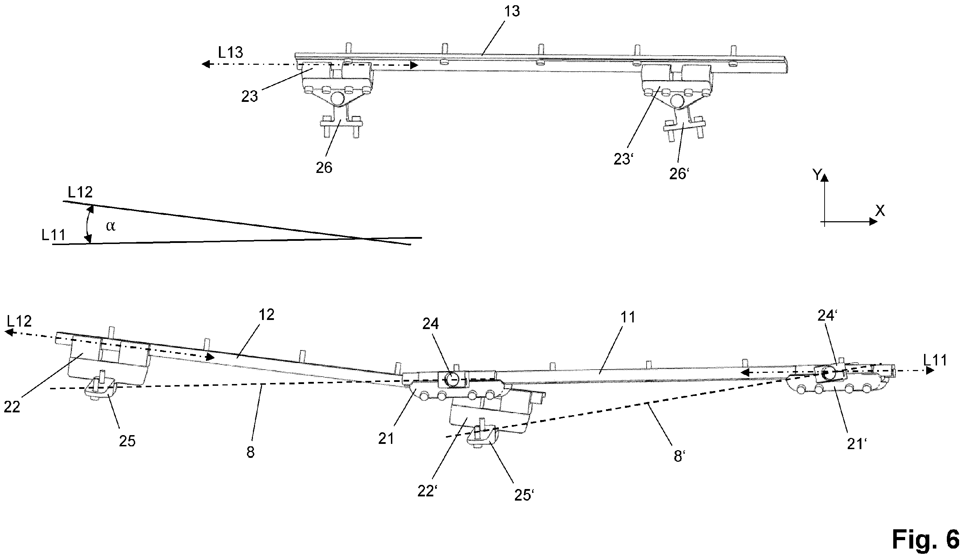

In Figur 6 sind die Führungsbahnen 11, 12 und 13 in den Positionen und Ausrichtungen des mit der Zelle 2 gefügten Zustands in einer Draufsicht dargestellt, die der Draufsicht der Figur 4 entspricht. Die Zelle 2 und die Schiebetür 8 sind zur Vereinfachung nicht dargestellt. Die mit den Führungsbahnen 11, 12 und 13 im Führungseingriff befindlichen Eingriffsglieder 21, 22 und 23 sind wie in Figur 5 jeweils in der ersten Position und der zweiten Position dargestellt. Die erste Position entspricht der Schließposition der Schiebetür 8. In der zweiten Position, die der Position der geöffneten Schiebetür 8' entspricht, sind die gleichen Eingriffsglieder wieder mit 21', 22' und 23' bezeichnet.

Die Führungsbahnen 11, 12 und 13 sind jeweils gerade, so dass die Führungsbahn 11 durch eine Längsachse L11, die Führungsbahn 12 durch eine Längsachse L12 und die Führungsbahn 13 durch eine Längsachse L13 repräsentiert werden. Die Längsrichtung der ersten Führungsbahn 11 fällt mit der Längsachse L11, die Längsrichtung der zweiten Führungsbahn 12 fällt mit der Längsachse L12 und die Längsrichtung der dritten Führungsbahn 13 fällt mit der Längsachse L13 zusammen.

Im Bereich der Führungsbahnen 11 und 12 repräsentieren eine gerade erste Strichlinie die geschlossene Schiebetür 8 und eine gerade zweite Strichlinie die geöffnete Schiebetür 8'. Tatsächlich ist die Schiebetür 8 in Bezug auf die X-Achse (Flugrichtung) und die Hochachse Z in Anpassung an die Zelle 2 gewölbt, wie in den Figuren 1 bis 4 erkennbar ist. Die Schiebetür 8 ist über das erste Eingriffsglied 21 mit der Führungsbahn 11, über das zweite Eingriffsglied 22 mit der Führungsbahn 12 und über das dritte Eingriffsglied 21 mit der Führungsbahn 13 mechanisch gekoppelt, so dass sie den Verschiebebewegungen der Eingriffsglieder 21, 22 und 23 folgt. Die Schiebetür 8 weist zur Übertragung von Kräften und/oder Drehmomenten eine erste Koppelstelle für die Kopplung mit dem ersten Eingriffsglied 21, eine zweite Koppelstelle für die Kopplung mit dem zweiten Eingriffsglied 22 und eine dritte Koppelstelle für die Kopplung mit dem dritten Eingriffsglied 23 auf. Die beiden mit 8 und 8' bezeichneten Strichlinien erstrecken sich in der Draufsicht durch die erste Koppelstelle und die zweite Koppelstelle der Schiebetür 8.

Die Eingriffsglieder 21, 22 und 23 werden im jeweiligen Führungseingriff längs der Führungsbahnen 11, 12 und 13 translatorisch geführt, was durch Richtungspfeile an den Längsachsen 11, 12 und 13 angedeutet wird, und sind mit der Schiebetür 8 mittels Gelenken mechanisch gekoppelt, so dass die Schiebetür 8 den Translationsbewegungen der Eingriffsglieder 21, 22 und 23 folgt. Dabei umfassen die Kopplung des ersten Eingriffsglieds 21 und der Schiebetür 8 ein erstes Befestigungselement 24, die Kopplung des zweiten Eingriffsglieds 22 und der Schiebetür 8 ein zweites Befestigungselement 25 und die Kopplung des dritten Eingriffsglieds 23 und der Schiebetür 8 ein drittes Befestigungselement 26. Die Befestigungselemente 24, 25 und 26 sind mit der Schiebetür 8 jeweils verbunden und stellen in der Kopplung der jeweiligen Führungsbahn 11, 12 und 13 und der Schiebetür 8 das jeweils letzte, der Schiebetür 8 nächste Koppelglied, dar. Dabei sind das erste Befestigungselement 24 an der ersten Koppelstelle der Schiebetür 8, das zweite Befestigungselement 22 an der zweiten Koppelstelle der Schiebetür 8 und das dritte Befestigungselement 23 an der dritten Koppelstelle der Schiebetür 8 mit der Schiebetür 8 zur Übertragung von Kräften und etwaigen Drehmomenten unbeweglich gefügt.

Die Eingriffsglieder 21, 22 und 23 können in Längsrichtung der zugeordneten Führungsbahn im Bereich des Führungseingriffs geteilt sein, um den Führungseingriff in Längsrichtung der jeweiligen Führungsbahn auf mehrere Eingriffsbereiche zu verteilen und dadurch einerseits der Gefahr des Klemmens und andererseits etwaigen Kippbewegungen entgegenzuwirken.

Die Kopplung des ersten Eingriffsglieds 21 und der Schiebetür 8 und/oder die Kopplung des zweiten Eingriffsglieds 22 und der Schiebetür 8 und/oder die Kopplung des dritten Eingriffsglieds 23 und der Schiebetür 8 kann oder können jeweils mehrere Gelenke umfassen, so dass die Schiebetür 8 bei ihrer Verschiebebewegung relativ zum jeweiligen Eingriffsglied um mehrere unterschiedliche Gelenkachsen rotatorisch und/oder translatorisch bewegbar ist. Im Ausführungsbeispiel ist die Kopplung der Schiebetür 8 mit dem jeweiligen Eingriffsglied 21, 22 und 23 jedoch vorteilhaft kurz und umfasst jeweils nur ein einziges Gelenk. Dabei ist jedes dieser Gelenke unmittelbar zwischen dem jeweiligen Eingriffsglied 21, 22 und 23 und dem jeweils zugeordneten Befestigungselement 24, 25 und 26 gebildet.

Die Gelenke 21, 24 und 22, 25 sowie 23, 26 sind vorteilhafterweise jeweils als Drehgelenk gebildet. Die Befestigungselemente 25 und 26 bilden im jeweiligen Gelenk einen Schwenkarm, wobei der vom Befestigungselemente 25 gebildete Schwenkarm kürzer als der vom Befestigungselemente 26 gebildete Schwenkarm ist. Die Schiebetür 8 ist der Länge des jeweiligen Schwenkarms entsprechend relativ zum Eingriffsglied 22 und relativ zum Eingriffsglied 23 um die jeweilige Gelenkachse schwenkbar. Das vom ersten Eingriffsglied 21 und dem ersten Befestigungselement 24 gebildete Gelenk 21, 24 ist ein reines Drehgelenk oder weist einen praktisch vernachlässigbar kurzen Schwenkarm auf. Das Eingriffsglied 21 ragt von der Führungsbahn 11 auch nicht nennenswert vor. Beides trägt zur Steifigkeit der Kopplung mit der ersten Führungsbahn bei. Die Schiebetür 8 wird an der ersten Führungsbahn 11 auch enger als an den Führungsbahnen 12 und 13 geführt.

Damit eine Translation der Schiebetür 8 deren Rotation bewirkt, weist die zweite Führungsbahn 12 in der Draufsicht mit einer Neigung α > 0° zur ersten Führungsbahn 11. Die Neigung α wird in der Draufsicht als der zwischen den Längsachsen bzw. Längsrichtungen L11 und L12 eingeschlossene Winkel gemessen. Die Neigung α kann größer als 2° oder größer als 3° sein. Zweckmäßigerweise ist die Neigung α höchstens 30° oder höchstens 20°. Besonders günstig sind Winkel zwischen 4° und 20°, wobei die Bereichsgrenzen eingeschlossen sind. Wenn sich die erste Führungsbahn 11 und die zweite Führungsbahn 12 wie bevorzugt in parallelen Bahnebenen erstrecken, wird die Draufsicht zur Messung der Neigung α durch eine Parallelprojektion der einen Führungsbahn orthogonal in die Bahnebene der anderen Führungsbahn erhalten. Von der Orthogonalität kann um einen Winkel von maximal 30° abgewichen werden. So kann die Neigung α trotz der in Horizontallage geringfügig zur Horizontalen geneigten Führungsbahnen 11, 12 und 13 in der horizontalen Draufsicht beispielsweise der Figur 6 gemessen werden.

Zur Verschiebebewegung der Schiebetür 8 ist anzumerken, dass eine etwaige statische Überbestimmtheit des kinematischen Systems aufgrund eines im realen System unvermeidbaren Spiels in den Gelenken und einer gewissen Elastizität der Schiebetür 8 nicht zu spüren ist.

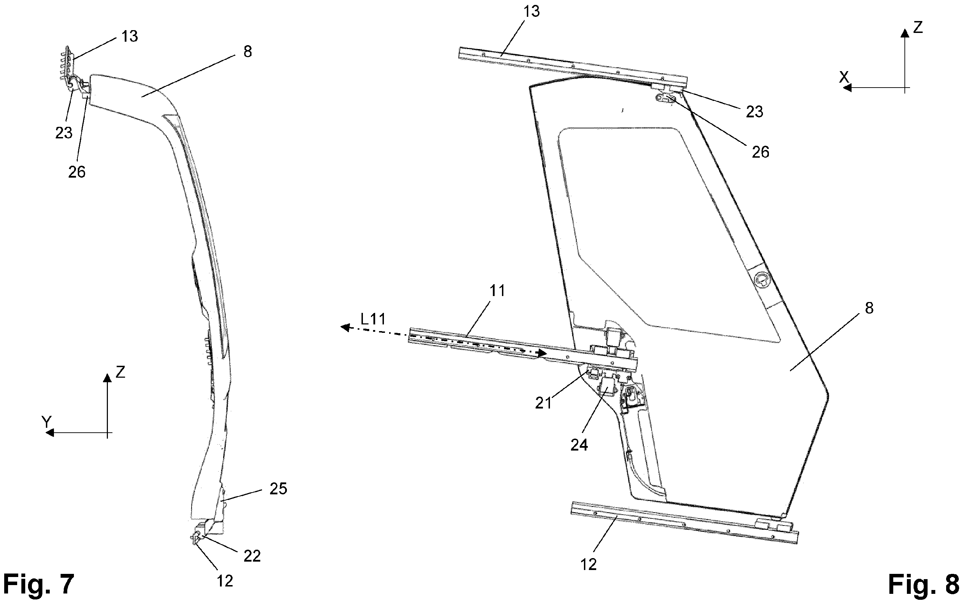

In den Figuren 7 und 8 sind die Führungsbahnen 11, 12 und 13 und deren Kopplung mit der Schiebetür 8 dargestellt. In der Stirnansicht der Figur 7 ist die zweite Koppelstelle in Form einer unbeweglichen Verbindung der Schiebetür 8 und des zweiten Befestigungselements 25, erkennbar. Figur 8, die eine Seitenansicht auf die Innenseite der Schiebetür 8 ist, zeigt die erste Koppelstelle in Form einer unbeweglichen Verbindung der Schiebetür 8 mit dem ersten Befestigungselement 24 und die dritte Koppelstelle in Form einer unbeweglichen Verbindung der Schiebetür 8 mit dem dritten Befestigungselement 26.

Wie in den Figuren 5, 6 und 8 erkennbar, ist die mit dem ersten Befestigungselement 24 gebildete erste Koppelstelle in Längsrichtung L11 der ersten Führungsbahn 11 zu der mit dem zweiten Befestigungselement 25 gebildeten zweiten Koppelstelle versetzt. Der Versatz der beiden Koppelstellen und der Versatz des Führungseingriffs der Eingriffsglieder 21 und 22 sind aufeinander abgestimmt. Sie entsprechen einander im Wesentlichen, so dass die Koppelstrecke zwischen der Schiebetür 8 und der Führungsbahn 11 und die Koppelstrecke zwischen der Schiebetür 8 und der Führungsbahn 12 vorteilhaft kurz sind und die Schiebetür8 eng an den Führungsbahnen 11 und 12 geführt wird. Die dritte Koppelstelle, an der das dritte Befestigungselement 26 mit der Schiebetür 8 verbunden ist, ist zur zweiten Koppelstelle in Bezug auf die Längsrichtung L11 der ersten Führungsbahn 11 in die gleiche Richtung wie die erste Koppelstelle versetzt. Sie kann zwischen der ersten Koppelstelle und der zweiten Koppelstelle liegen und in Bezug auf die Längsrichtung L11 auch zur ersten Koppelstelle versetzt sein.

Das dritte Eingriffsglied 23 ist in einem kurzen Abstand von der dritten Koppelstelle im Führungseingriff mit der dritten Führungsbahn 23, so dass auch die Koppelstrecke der Schiebetür 8 mit der Führungsbahn 13 vorteilhaft kurz ist. Mittels der dritten Koppelstelle wird eine Dreipunktlagerung der Schiebetür 8 erhalten.

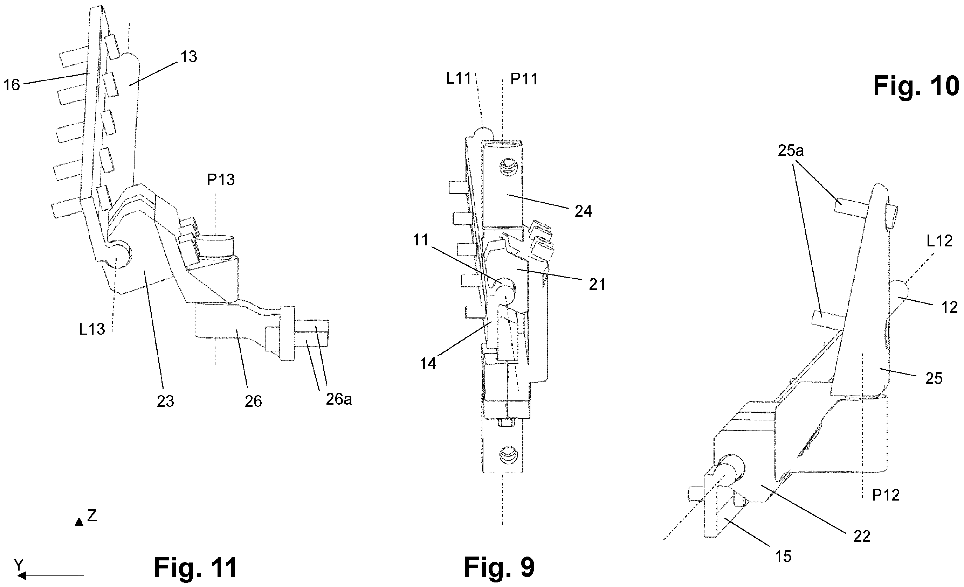

Die Figuren 9 bis 11 zeigen die Führungsbahnen 11, 12 und 13 mit den jeweiligen Koppelgliedern, also den Eingriffsgliedern 21, 22 und 23 und Befestigungselementen 24, 25 und 26, nebeneinander und in einer Ausrichtung relativ zueinander, die der Ausrichtung an der Zelle 2 in einer Stirnansicht auf die Vorderseite der Zelle 2 entspricht. Allerdings sind die Führungsbahnen 11, 12 und 13 mit den jeweiligen Koppelgliedern in Vertikalrichtung Z und Querrichtung Y im Vergleich zu den tatsächlichen Fügepositionen relativ zueinander verschoben. Die Zelle 2 und die Schiebetür 8 sind zur Vereinfachung nicht dargestellt.

Figur 9 zeigt die erste Führungsbahn 11, das mit der Führungsbahn 11 im Führungseingriff befindliche erste Eingriffselement 21 und das erste Befestigungselement 24, das mit dem Eingriffselement 21 das erste Gelenk 21, 24 bildet. Das erste Gelenk 21, 24 ist ein Drehgelenk mit einer Gelenkachse P11, die dementsprechend eine Rotationsachse bildet. Das Gelenk 21, 24 bestimmt in der Kopplung von Führungsbahn 11 und Schiebetür 8 somit einen Freiheitsgrad der Rotation um die Gelenkachse P11. Die Gelenkachse P11 kann die Längsachse L11 der Führungsbahn 11 schneiden, was im Ausführungsbeispiel der Fall ist, oder in einem geringen Abstand kreuzen. Sie kann insbesondere orthogonal zur Längsachse L11 weisen.

Das Befestigungselement 24 weist einen Durchgang für ein Fügemittel, beispielsweise einen Schaft einer Befestigungsschraube, zum Fügen mit der Schiebetür 8 auf. Um die Steifigkeit der Fügeverbindung mit der Schiebetür 8 zu erhöhen, umfasst das Befestigungselement 24 zwei Ausleger, von denen der eine oberhalb der Führungsbahn 11 und der andere unterhalb der Führungsbahn 11 vom Eingriffsglied 21 vorsteht, so dass das erste Befestigungselement 24 oberhalb und unterhalb der Führungsbahn 11 mit der Schiebetür 8 gefügt ist. Die erste Koppelstellte der Schiebetür 8 umfasst daher zwei Fügestellen, von denen die eine oberhalb und die andere unterhalb der Führungsbahn 11 liegt.

Figur 10 zeigt die zweite Führungsbahn 12, das mit der Führungsbahn 12 im Führungseingriff befindliche zweite Eingriffselement 22 und das zweite Befestigungselement 25, das mit dem Eingriffselement 22 das zweite Gelenk 22, 25 bildet. Das Gelenk 22, 25 ist ebenfalls ein Drehgelenk mit einer Gelenkachse P 12, die dementsprechend eine Rotationsachse bildet. Das zweite Gelenk 22, 25 bestimmt in der Kopplung von Führungsbahn 12 und Schiebetür 8 somit einen Freiheitsgrad der Rotation um die Gelenkachse P12. Die Gelenkachse P12 kreuzt die Längsachse L12 der Führungsbahn 12 in einem Abstand, wobei das Eingriffsglied 22 in Bezug auf die Führungsbahn 12 einen Ausleger bildet. Das Befestigungselement 25 bildet in der Kopplung einen kurzen Schwenkarm um die Gelenkachse P12. Die Gelenkachse P12 kann insbesondere orthogonal zur Längsachse L12 der zweiten Führungsbahn 12 weisen und/oder parallel zur Gelenkachse P11 des ersten Gelenks 21, 24 sein.

Das Befestigungselement 25 wird mittels Fügemitteln 25a mit der Schiebetür 8 an deren zweiten Koppelstelle gefügt, beispielsweise mittels Schraubverbindung.

Figur 11 zeigt die dritte Führungsbahn 13, das mit der Führungsbahn 13 im Führungseingriff befindliche dritte Eingriffselement 23 und das dritte Befestigungselement 26, das mit dem Eingriffselement 23 das dritte Gelenk 23, 26 bildet. Das Gelenk 23, 26 ist ebenfalls ein Drehgelenk mit einer Gelenkachse P13, die dementsprechend eine Rotationsachse bildet. Das dritte Gelenk 23, 26 bestimmt in der Kopplung von Führungsbahn 13 und Schiebetür 8 somit einen Freiheitsgrad der Rotation um die Gelenkachse P13. Die Gelenkachse P13 kreuzt die Längsachse L13 der Führungsbahn 13 in einem Abstand, wobei des Eingriffsglied 23 in Bezug auf die Führungsbahn 12 einen Ausleger bildet. Die Gelenkachse P13 kann insbesondere orthogonal zur Längsachse L13 der dritten Führungsbahn 13 weisen und/oder parallel zur Gelenkachse P11 des ersten Gelenks 21, 14 sein.

Das dritte Befestigungselement 26 wird mittels Fügemitteln 26a mit der Schiebetür 8 an deren dritten Koppelstelle gefügt, beispielsweise mittels Schraubverbindung. Das Befestigungselement 26 bildet einen Schwenkarm um die Gelenkachse P13. Die Schiebetür 8 kann somit in der Kopplung mit der Führungsbahn 13 um die Gelenkachse P13 schwenken.

Die Führungsbahnen 11, 12 und 13 werden jeweils von einem stabförmigen Führungsprofil gebildet, das einen runden Außenumfang aufweist. Jedes der Eingriffsglieder 21, 22 und 23 weist einen an das Führungsprofil der zugeordneten Führungsbahn angepasst geformten Innenumfang auf, mit dem es die jeweilige Führungsbahn im Führungseingriff über einen Bogenwinkel von mehr als 180° umgreift. Der Außenumfang des jeweiligen Führungsprofils kann im Bereich des Führungseingriffs kreisrund sein, so dass die Führungsbahnen 11, 12 und 13 und die Eingriffsglieder 21, 22 und 23 im Führungseingriff jeweils ein Drehschubgelenk bilden.

Die Führungsbahn 11 ist Bestandteil einer geraden Führungsschiene, die zusätzlich zur Führungsbahn 11 eine Leiste 14 umfasst, die im Querschnitt der Führungsschiene gesehen von dem die Führungsbahn 11 bildenden Führungsprofil unter Ausbildung einer Kröpfung seitlich vorragt. Die Führungsschiene und damit die Führungsbahn 11 ist im Bereich der Leiste 14 dauerhaft fest mit der Zelle 2 gefügt. Bei den Führungsbahnen 12 und 13 sind die Verhältnisse die gleichen, wobei die dem Fügen mit der Schiebetür 8 dienenden Leisten mit den Bezugszeichen "15" und "16" versehen sind.

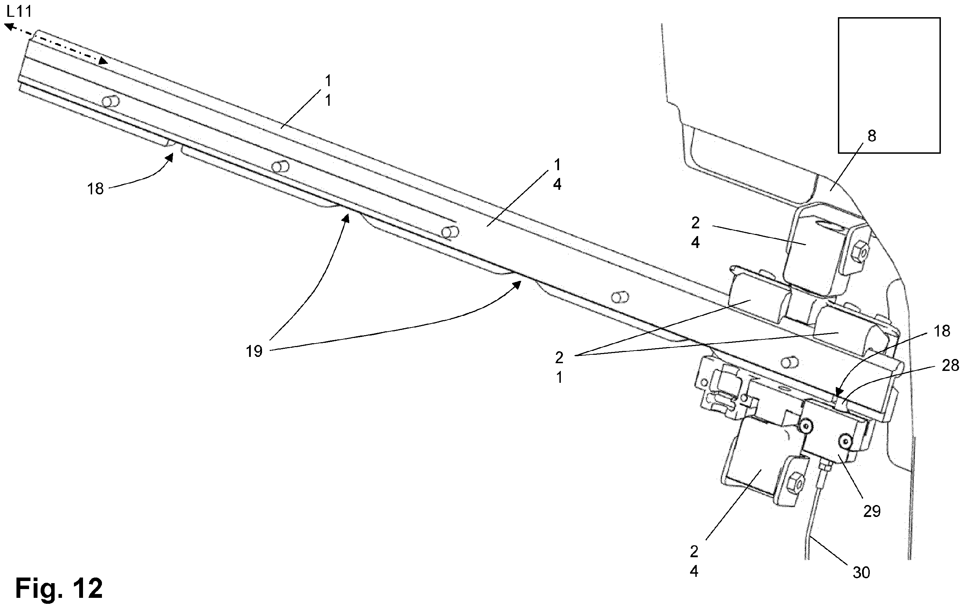

Figur 12 zeigt die erste Führungsbahn 11 im gefügten Zustand in einer isometrischen Sicht auf die Innenseite der Schiebetür 8. Die Schiebetür 8 ist lediglich in Umrissen und auch nur im Bereich der Fügeverbindung mit dem Befestigungselement 24, also im Bereich der ersten Koppelstelle, dargestellt. Die beiden Ausleger des Befestigungselements 24 sind jeweils mittels Schraubverbindung mit der Schiebetür 8 gefügt.

Die Schiebetür 8 ist in diskreten Verschiebepositionen arretierbar. Das Schiebetürsystem umfasst hierfür einen Rastmechanismus mit einem Rastglied 28 und mehreren Rastgegengliedern 18 und 19. Das Rastglied 28 ist am Eingriffsglied 21 hin und her beweglich und dadurch in einen Rasteingriff und aus dem Rasteingriff mit jeweils einem der Rastgegenglieder 18 und 19 gelagert. Die Rastgegenglieder 18 und 19 sind in Längsrichtung L11 der Fügungsbahn 11 verteilt, so dass das Rastglied 28 bei der Verschiebebewegung der Schiebetür 8 in den durch die Rastgegenglieder 18 und 19 vorgegebenen diskreten Positionen in den Rasteingriff mit dem jeweiligen Rastgegenglied 18 und 19 gelangt. Die Rastgegenglieder 18 und 19 sind jeweils eine Vertiefung an einer dem Rastglied 28 zugewandten Längsseite der Führungsbahn 11. Dabei weist die Führungsbahn 11 an dieser Längsseite ein der Schließposition der Schiebetür 8 zugeordnetes erstes Rastglied 18, ein der vollständig geöffneten Position der Schiebetür 8 zugeordnetes weiteres erstes Rastglied 18 und in Längsrichtung L11 der Führungsbahn 11 zwischen den beiden ersten Rastgliedern 18 mehrere zweite Rastglieder 19 auf.

In Figur 12 nimmt die Schiebetür 8 die Schließposition ein. Das Rastglied 28 ist dementsprechend in einem Rasteingriff mit dem ersten Rastgegenglied 18, das der Schließposition zugeordnet ist. Dieser Rasteingriff ist nur durch Betätigung des Rastglieds 28 lösbar. Wird das Rastglied 28 durch Betätigung aus dem Rasteingriff bewegt, kann die Schiebetür 8 im Führungseingriff des Eingriffsglieds 21 längs der Führungsbahn 11 in Richtung auf die geöffnete Position verschoben werden. Gelangt das Rastglied 28 im Verlauf dieser Verschiebebewegung in die Überlappung mit einem der Rastgegenglieder 19, schnappt das Rastglied 28 automatisch in die Rastposition mit den jeweiligem Rastgegenglied 19. Die Rastgegenglieder 19 sind so geformt, dass der Rasteingriff durch eine auf die Schiebetür 8 in Verschieberichtung ausgeübte Kraft gelöst werden kann. Für diesen Zweck weist jedes der Rastgegenglieder 19 für jede der beiden Verschieberichtungen an den Seiten eine Rampe auf, längs der sich das Rastglied 28 im Gleiteingriff aus dem Rasteingriff bewegen kann.

Das Rastglied 28 ist zapfenförmig und ist in einer fest mit dem Eingriffsglied 21 verbundenen Aufnahme 29 in und aus dem Rasteingriff beweglich gelagert. Das Rastglied 28 wird mit Federkraft in Richtung auf den Rasteingriff beaufschlagt und kann sich gegen die Federkraft aus dem Rasteingriff bewegen. Zur Aufbringung der Federkraft kann eine pneumatische oder vorzugsweise eine mechanische Feder verwendet werden. Die Betätigung aus dem Rasteingriff kann mechanisch, im Ausführungsbeispiel mittels eines Bautenzugs 30, oder alternativ pneumatisch, hydraulisch oder elektrisch erfolgen.

Wird die Schiebetür 8 bis in die vollständig geöffnete Position bewegt, rastet das Rastglied 28 aufgrund der Belastung durch die Federkraft selbsttätig in den Rasteingriff mit dem der geöffneten Position zugeordneten Rastgegenglied 18. Die ersten Rastgegenglieder 18 sind so geformt, dass der jeweilige Rasteingriff allein durch eine in Längsrichtung L11 der Führungsbahn 11 wirkenden Kraft nicht, jedenfalls nicht zerstörungsfrei, gelöst werden kann. Vielmehr ist zur Lösung des Rasteingriffs mit dem jeweiligen Rastgegenglied 19 eine Betätigung des Rastglieds 28 erforderlich.

## Patentansprüche

1. Schiebetürsystem mit einem Gestell (2), einer Schiebetür (8) zum Verschließen einer Öffnung (7) des Gestells (2) und einer Lageranordnung zur beweglichen Lagerung der Schiebetür (8), die Lageranordnung umfassend:
1.1 eine erste Führungsbahn (11) und eine zweite Führungsbahn (12), die jeweils am Gestell (2) angeordnet sind,
1.2 ein erstes Eingriffsglied (21), das in einem Führungseingriff mit der ersten Führungsbahn (11) in Längsrichtung (L11) der ersten Führungsbahn (11) beweglich ist, und
1.3 ein zweites Eingriffsglied (22), das in einem Führungseingriff mit der zweiten Führungsbahn (12) in Längsrichtung (L12) der zweiten Führungsbahn (12) beweglich ist, wobei
1.4 die Schiebetür (8) an einer ersten Koppelstelle mit dem ersten Eingriffsglied (21) und an einer zweiten Koppelstelle mit dem zweiten Eingriffsglied (22) gekoppelt ist, so dass die Schiebetür (8) einer Bewegung des ersten Eingriffsglieds (21) und einer Bewegung des zweiten Eingriffsglieds (22) folgt,
1.5 die erste Führungsbahn (11) und die zweite Führungsbahn (12) in einer Draufsicht mit einer Neigung (α) zueinander verlaufen,
1.6 das erste Eingriffsglied (21) über ein erstes Gelenk (21, 24) mit der ersten Koppelstelle und das zweite Eingriffsglied (22) über ein zweites Gelenk (22, 25) mit der zeiten Koppelstelle der Schiebetür (8) beweglich verbunden sind, und
1.7 die erste Koppelstelle der Schiebetür (8) in Bezug auf die Längsrichtung (L11) der ersten Führungsbahn (11) und/oder in Bezug auf die Längsrichtung (L12) der zweiten Führungsbahn (12) zur zweiten Koppelstelle der Schiebetür (8) versetzt ist.

2. Schiebetürsystem nach Anspruch 1, wobei das erste Eingriffsglied (21) im Führungseingriff mit der ersten Führungsbahn (11) und das zweite Eingriffsglied (22) im Führungseingriff mit der zweiten Führungsbahn (12) in Bezug auf die Längsrichtung (L11) der ersten Führungsbahn (11) und/oder in Bezug auf die Längsrichtung (L12) der zweiten Führungsbahn (12) zueinander versetzt sind.

3. Schiebetürsystem nach einem der vorhergehenden Ansprüche, wobei die Neigung (α) größer als 2° oder wenigstens 3° ist.

4. Schiebetürsystem nach einem der vorhergehenden Ansprüche, wobei die Lageranordnung ferner eine am Gestell (1) angeordnete dritte Führungsbahn (13) und ein drittes Eingriffsglied (23) umfasst, das dritte Eingriffsglied (23) in einem Führungseingriff mit der dritten Führungsbahn (13) in Längsrichtung (L13) der dritten Führungsbahn (13) beweglich ist, und wobei die Schiebetür (8) an einer dritten Koppelstelle mit dem dritten Eingriffsglied (23) gekoppelt ist, so dass die Schiebetür (8) einer Bewegung des dritten Eingriffsglieds (23) folgt, wobei das dritte Eingriffsglied (23) vorzugsweise über ein drittes Gelenk (23, 26) mit der dritten Koppelstelle der Schiebetür (8) gekoppelt ist.

5. Schiebetürsystem nach einem der vorhergehenden Ansprüche, wobei die erste Führungsbahn (11) und/oder die zweite Führungsbahn (12) und/oder die dritte Führungsbahn (13), falls vorhanden, gerade ist oder jeweils sind.

6. Schiebetürsystem nach einem der vorhergehenden Ansprüche, wobei sich die Führungsbahnen (11, 12, 13) jeweils in einer Bahnebene erstrecken und die Bahnebenen insbesondere zueinander parallel und voneinander beabstandet sein können.

7. Schiebetürsystem nach einem der vorhergehenden Ansprüche, wobei die Schiebetür (8) im Führungseingriff der Eingriffsglieder (21, 22, 23) und über die Gelenke (21, 24; 22, 25; 23, 26) getragen auf einer vorgegebenen, virtuellen Trajektorie translatorisch und rotatorisch zwangsgeführt wird.

8. Schiebetürsystem nach einem der vorhergehenden Ansprüche, die Lageranordnung ferner umfassend:
- ein erstes Befestigungselement (24), das mit der Schiebetür (8) an der ersten Koppelstelle der Schiebetür (8) zur Übertragung von Kraft und/oder Drehmoment gefügt und mit dem ersten Eingriffsglied (21) über das erste Gelenk (21, 24) beweglich gekoppelt ist, und
- ein zweites Befestigungselement (25), das mit der Schiebetür (8) an der zweiten Koppelstelle der Schiebetür (8) zur Übertragung von Kraft und/oder Drehmoment gefügt und mit dem zweiten Eingriffsglied (22) über das zweite Gelenk (22, 25) beweglich gekoppelt ist,
- optional ein drittes Befestigungselement (26), das mit der Schiebetür (8) an einer dritten Koppelstelle der Schiebetür (8) zur Übertragung von Kraft und/oder Drehmoment gefügt und mit dem dritten Eingriffsglied (23) nach Anspruch 5, falls vorhanden, über ein drittes Gelenk (23, 26) beweglich gekoppelt ist.

9. Schiebetürsystem nach einem der zwei unmittelbar vorhergehenden Ansprüche, wobei das erste Eingriffsglied (21) mit dem ersten Befestigungselement (24) das erste Gelenk (21, 24) und/oder das zweite Eingriffsglied (22) mit dem zweiten Befestigungselement (25) das zweite Gelenk (22, 25) und/oder das dritte Eingriffsglied (23), falls vorhanden, mit dem dritten Befestigungselement (26), falls vorhanden, das dritte Gelenk (23, 26) bildet oder jeweils bilden.

10. Schiebetürsystem nach einem der vorhergehenden Ansprüche, wobei die erste Koppelstelle der Schiebetür (8) abgesehen von Lagerspiel relativ zum ersten Eingriffsglied (11) nur rotatorisch und nur um eine erste Rotationsachse (P11) und/oder die zweite Koppelstelle der Schiebetür (8) abgesehen von Lagerspiel relativ zum zweiten Eingriffsglied (12) nur rotatorisch und nur um eine zweite Rotationsachse (P12) und/oder die dritte Koppelstelle der Schiebetür (8), falls vorhanden, abgesehen von Lagerspiel relativ zum dritten Eingriffsglied (13), falls vorhanden, nur rotatorisch und nur um eine dritte Rotationsachse (P13) beweglich ist oder jeweils sind.

11. Schiebetürsystem nach einem der vorhergehenden Ansprüche, wobei das erste Gelenk (21, 24) eine quer zur ersten Führungsbahn (11) erstreckte Gelenkachse (P11) und/oder das zweite Gelenk (22, 25) eine quer zur zweiten Führungsbahn (22) erstreckte Gelenkachse (P12) und/oder das dritte Gelenk (23, 26), falls vorhanden, eine quer zur dritten Führungsbahn (13) erstreckte Gelenkachse (P13) aufweist oder aufweisen und die Schiebetür (8) relativ zum jeweiligen Eingriffsglied (21, 22, 23) um die jeweilige Gelenkachse (P11, P12, P13) rotatorisch beweglich ist, wobei die Gelenkachse (P11) des ersten Gelenks (21, 24) vorzugsweise parallel zur Gelenkachse (P12) des zweiten Gelenks (22, 25) und/oder zur Gelenkachse (P13) des dritten Gelenks (23, 26), falls vorhanden, ist.

12. Schiebetürsystem nach einem der vorhergehenden Ansprüche, wobei das erste Eingriffsglied (21) um eine in Längsrichtung (L11) der ersten Führungsbahn (11) weisende Achse (L11) rotatorisch beweglich ist und/oder das zweite Eingriffsglied (22) um eine in Längsrichtung (L12) der zweiten Führungsbahn (12) weisende Achse (L12) rotatorisch beweglich ist und/oder das dritte Eingriffsglied (13), falls vorhanden, um eine in Längsrichtung (L13) der dritten Führungsbahn (13) weisende Achse (L13) rotatorisch beweglich ist oder sind.

13. Schiebetürsystem nach einem der vorhergehenden Ansprüche, wobei eines der Eingriffsglieder (11, 12, 13), beispielsweise das erste Eingriffsglied (21), ein Rastglied (28) hin und her beweglich lagert und die zugeordnete Führungsbahn (11), beispielsweise die erste Führungsbahn (11), ein oder mehrere Rastgegenglieder (18, 19) für einen Rasteingriff mit dem Rastglied (28) aufweist.

14. Schiebetürsystem nach einem der zwei unmittelbar vorhergehenden Ansprüche, wobei
- längs der zugeordneten Führungsbahn (11) wenigstens ein erstes Rastgegenglied (18) und hiervon in Längsrichtung (L11) der zugeordneten Führungsbahn (11) beabstandet ein zweites Rastgegenglied (19) jeweils für einen Rasteingriff mit dem Rastglied (28) vorgesehen sind,
- das erste Rastgegenglied (18) so geformt ist, dass zur Lösung des Rasteingriffs eine Betätigung des Rastglieds (28) erforderlich ist, und
- das zweite Rastgegenglied (19) so geformt ist, dass der Rasteingriff durch Ausübung einer in Längsrichtung (L11) der zugeordneten Führungsbahn (11) auf das Rastglied (28) wirkenden Kraft zerstörungsfrei lösbar ist.

15. Luftfahrzeug mit einer Zelle und einer Schiebetür zum Verschließen einer Öffnung der Zelle, vorzugsweise einer Ein- und Ausstiegsöffnung des Luftfahrzeugs, wobei das Schiebetürsystem nach einem der vorhergehenden Ansprüche die Schiebetür (8) und die Zelle im Bereich um die Öffnung (7) das Gestell (2) des Schiebetürsystems bilden, wobei das Luftfahrzeug insbesondere ein Drehflügler, beispielsweise ein Gyrokopter, sein kann.
